# EUROPEAN PATENT APPLICATION

(11) **EP 4 734 577 A1**
(43) Date of publication of application: **29.04.2026**
(21) Application number: 23941976.5
(22) Date of filing: 21.06.2023
(51) Int. Cl.: H04W 12/08

(54) **AUTHORIZATION METHOD AND APPARATUS**

(71) Applicant: Beijing Xiaomi Mobile Software Co., Ltd., Beijing 100085 (CN)
(72) Inventor: LI, Lisi, Beijing 100085 (CN)
(74) Representative: Gunzelmann, Rainer
(86) International application number: PCT/CN2023/101972
(87) International publication number: WO 2024/259705

(57) **Abstract**

Disclosed in embodiments of the present invention are an authorization method and an apparatus, applicable to the scenario supporting integrated access and backhaul (IAB). The method comprises: a first node receives first information from a second node, the first information being information related to authorization of a mobile IAB node; and the first node determines, on the basis of the first information, whether the mobile IAB node is authorized to provide service to a terminal device. By implementing the embodiments of the present invention, a first node can obtain information related to authorization of a mobile IAB node, the first node determines, on the basis of the information, whether the mobile IAB node is authorized to provide service to a terminal device, and the terminal device can use the service provided by the mobile IAB node, such that the terminal device can obtain better communication connection by means of the mobile IAB node, thereby ensuring the service continuity and an access success rate of the terminal device, and improving user experience.

## Description

### TECHNICAL FIELD

The present disclosure relates to the field of communication technology, and specifically to an authorization method and apparatus.

### BACKGROUND

In the related art, in an initial integration scenario of mobile integrated access and backhaul (IAB), an IAB-mobile termination (IAB-MT) in a mobile IAB-node (also called mobile base station relay (MBSR) or vehicle mobile relay (VMR)) and an IAB-distributed unit (IAB-DU) in the mobile IAB-node can be integrated into different donor-centralized units (donor-CUs, also called donor-control unit). In a migration scenario of mobile IAB, the IAB-MT in the mobile IAB-node and the IAB-DU in the mobile IAB-node can also be migrated to different donor-CUs.

However, when the donor-CU of the IAB-MT is different from the donor-CU of the IAB-DU, how to enable the mobile IAB-nodes corresponding to the IAB-MT and IAB-DU to provide services to a terminal has become an urgent problem to be solved.

### SUMMARY

Embodiments of the present disclosure provide an authorization method and apparatus.

According to a first aspect of embodiments of the present disclosure, an authorization method is provided. The method is performed by a first node and includes:
receiving first information from a second node, in which the first information is information related to an authorization of a mobile integrated access and backhaul (IAB)-node; and
determining, according to the first information, whether the mobile IAB-node is authorized to provide a service to a user equipment (UE).

According to a second aspect of the embodiments of the present disclosure, an authorization method is provided. The method is performed by a second node and includes:
sending first information to a first node, in which the first information is information related to an authorization of a mobile IAB-node, and the first information is used by the first node to determine whether the mobile IAB-node is authorized to provide a service to a user equipment (UE).

According to a third aspect of the embodiments of the present disclosure, an authorization method is provided. The method is performed by a third node and includes:
sending identifier information for an authorization request to a second node, in which the identifier information is used by the second node to send first information to a first node, the first information is information related to an authorization of a mobile IAB-node, and the first information is used by the first node to determine whether the mobile IAB-node is authorized to provide a service to a user equipment (UE).

According to a fourth aspect of the embodiments of the present disclosure, an authorization method is provided. The method is performed by a third node and includes:
sending first information to a first node via a second node, in which the first information is information related to an authorization of a mobile IAB-node, and the first information is used by the first node to determine whether the mobile IAB-node is authorized to provide a service to a user equipment (UE).

According to a fifth aspect of the embodiments of the present disclosure, an authorization method is provided. The method is performed by a third node and includes:
sending third information to a first node, in which the third information is used by the first node to send second information to a second node, the second information is used by the second node to send first information to the first node, the first information is information related to an authorization of a mobile IAB-node, and the first information is used by the first node to determine whether the mobile IAB-node is authorized to provide a service to a user equipment (UE).

According to a sixth aspect of the embodiments of the present disclosure, an authorization method is provided. The method is performed by a communication system and includes:
sending, by a second node, first information to a first node, in which the first information is information related to an authorization of a mobile IAB-node; and
receiving, by the first node, the first information, and determining, according to the first information, whether the mobile IAB-node is authorized to provide a service to a user equipment (UE).

According to a seventh aspect of the embodiments of the present disclosure, a first communication apparatus is provided. The communication apparatus includes:
a transceiver module, configured to receive first information from a second node, in which the first information is information related to an authorization of a mobile IAB-node; and
a processing module, configured to determine, according to the first information, whether the mobile IAB-node is authorized to provide a service to a user equipment (UE).

According to an eighth aspect of the embodiments of the present disclosure, a first communication apparatus is provided. The communication apparatus includes:
a transceiver module, configured to send first information to a first node, in which the first information is information related to an authorization of a mobile IAB-node, and the first information is used by the first node to determine whether the mobile IAB-node is authorized to provide a service to a user equipment (UE).

According to a ninth aspect of the embodiments of the present disclosure, a third communication apparatus is provided. The communication apparatus includes:
a transceiver module, configured to send identifier information for an authorization request to a second node, in which the identifier information is used by the second node to send first information to a first node, the first information is information related to an authorization of a mobile IAB-node, and the first information is used by the first node to determine whether the mobile IAB-node is authorized to provide a service to a user equipment (UE).

According to a tenth aspect of the embodiments of the present disclosure, a fourth communication apparatus is provided. The communication apparatus includes:
a transceiver module, configured to send first information to a first node via a second node, in which the first information is information related to an authorization of a mobile IAB-node, and the first information is used by the first node to determine whether the mobile IAB-node is authorized to provide a service to a user equipment (UE).

According to an eleventh aspect of the embodiments of the present disclosure, a fifth communication apparatus is provided. The communication apparatus includes:
a transceiver module, configured to send third information to a first node, in which the third information is used by the first node to send second information to a second node, the second information is used by the second node to send first information to the first node, the first information is information related to an authorization of a mobile IAB-node, and the first information is used by the first node to determine whether the mobile IAB-node is authorized to provide a service to a user equipment (UE).

According to a twelfth aspect of the embodiments of the present disclosure, a communication apparatus is provided. The communication apparatus includes:
one or more processors;
in which the processor is configured to call instructions to cause the communication apparatus to perform the method of alternative implementations of any one of the first aspect, the second aspect, the third aspect, the fourth aspect and the fifth aspect.

According to a thirteenth aspect of the embodiments of the present disclosure, a communication system is provided. The communication system includes a first node and a second node. The first node is configured to perform the method of the first aspect, and the second node is configured to perform the method of the second aspect.

According to a fourteenth aspect of the embodiments of the present disclosure, a storage medium is provided. The storage medium has instructions stored thereon. When the instructions are executed on a communication apparatus, the communication apparatus is caused to perform the method of alternative implementations of any one of the first aspect, the second aspect, the third aspect, the fourth aspect and the fifth aspect.

According to the technical solution in the present disclosure, the first node can obtain information related to the authorization of the mobile IAB-node, so that the first node can determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

### BRIEF DESCRIPTION OF THE DRAWINGS

In order to clearly illustrate technical solutions of the embodiments and the background of the present disclosure, a brief description of drawings used in embodiments is given below, and the following drawings are only some embodiments of the present disclosure and do not impose specific limitations on the protection scope of the present disclosure.
FIG. 1a is a schematic diagram of an integrated access and backhaul (IAB) architecture provided by an embodiment of the present disclosure;
FIG. 1b is a schematic diagram of an IAB architecture provided by an embodiment of the present disclosure;
FIG. 1c is a schematic diagram of signaling during IAB-node integration provided by an embodiment of the present disclosure;
FIG. 1d is a schematic diagram of a donor-centralized unit (donor-CU) of an IAB-mobile termination (IAB-MT) and a donor-CU of an IAB-distributed unit (IAB-DU) before migration provided by an embodiment of the present disclosure;
FIG. 1e is a schematic diagram of a donor-CU of an IAB-MT and a donor-CU of an IAB-DU after partial migration provided by an embodiment of the present disclosure;
FIG. 2 is a schematic diagram of a communication system 200 according to an embodiment of the present disclosure;
FIG. 3 is a schematic diagram of a communication system 300 according to an embodiment of the present disclosure;
FIG. 4a is an interaction diagram of an authorization method according to an embodiment of the present disclosure;
FIG. 4b is an interaction diagram of an authorization method according to an embodiment of the present disclosure;
FIG. 4c is an interaction diagram of an authorization method according to an embodiment of the present disclosure;
FIG. 5a is a flowchart of an authorization method according to an embodiment of the present disclosure;
FIG. 5b is a flowchart of an authorization method according to an embodiment of the present disclosure;
FIG. 5c is a flowchart of an authorization method according to an embodiment of the present disclosure;
FIG. 6a is a flowchart of an authorization method according to an embodiment of the present disclosure;
FIG. 6b is a flowchart of an authorization method according to an embodiment of the present disclosure;
FIG. 6c is a flowchart of an authorization method according to an embodiment of the present disclosure;
FIG. 7a is a flowchart of an authorization method according to an embodiment of the present disclosure;
FIG. 7b is a flowchart of an authorization method according to an embodiment of the present disclosure;
FIG. 7c is a flowchart of an authorization method according to an embodiment of the present disclosure;
FIG. 8a is a flowchart of an authorization method according to an embodiment of the present disclosure;
FIG. 8b is a flowchart of an authorization method according to an embodiment of the present disclosure;
FIG. 8c is a flowchart of an authorization method according to an embodiment of the present disclosure;
FIG. 8d is a flowchart of an authorization method according to an embodiment of the present disclosure;
FIG. 8e is a flowchart of an authorization method according to an embodiment of the present disclosure;
FIG. 9a is a block diagram of a communication apparatus 9100 according to an embodiment of the present disclosure;
FIG. 9b is a block diagram of a communication apparatus 9200 according to an embodiment of the present disclosure;
FIG. 9c is a block diagram of a chip 9300 according to an embodiment of the present disclosure.

### DETAILED DESCRIPTION

Embodiments of the present disclosure provide an authorization method and apparatus.

According to a first aspect, the embodiments of the present disclosure provide an authorization method. The method is performed by a first node and includes:

receiving first information from a second node, in which the first information is information related to an authorization of a mobile integrated access and backhaul (IAB)-node; and

determining, according to the first information, whether the mobile IAB-node is authorized to provide a service to a user equipment (UE).

In the above embodiment, the first node can obtain information related to the authorization of the mobile IAB-node, so that the first node can determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

In combination with some embodiments of the first aspect, in some embodiments, the first information includes at least one of:
authorization information;
an IAB-node identifier (IAB-node ID); or
information indicating an authorization failure.

In some embodiments, the information indicating the authorization failure may be a cause value in the request failure, for example, the cause value is set to "not authorized".

In the above embodiment, one or more of the authorization information, the IAB-node ID and the information indicating the authorization failure in the first information may enable the first node to more accurately determine whether the mobile IAB-node is authorized to provide the service to the terminal.

In combination with some embodiments of the first aspect, in some embodiments, the IAB-node ID includes any one of:
a global identifier of an integrated access and backhaul mobile termination (IAB-MT);
a UE identifier (UE ID) of an IAB-MT on an Xn application protocol (XnAP);
a UE ID of an IAB-MT on a next generation application protocol (NGAP);
a UE ID of an IAB-MT on an F1 application protocol (F1AP); or
a backhaul adaptation protocol (BAP) address.

In the above embodiment, the IAB-node ID allows the first node to more accurately determine which mobile IAB-node is authorized or not authorized to provide the service to the terminal, thereby improving the judgment accuracy of the first node.

In combination with some embodiments of the first aspect, in some embodiments, the first node is an F1-terminating-donor-centralized unit (Fl-terminating-donor-CU, which refers to a donor-CU connected to an IAB-DU of an IAB-node in the present disclosure, and may also be referred to as F1-terminating-donor, IAB-donor or IAB-donor-CU), and the second node is a radio resource control-terminating-donor-centralized unit (RRC-terminating-donor-CU, which refers to a donor-CU connected to an IAB-MT of the IAB-node in the present disclosure, and may also be referred to as RRC-terminating-donor, IAB-donor or IAB-donor-CU); or
the first node is an F1-terminating-donor-CU, and the second node is an access and mobility management function (AMF); or
the first node is an F1-terminating-donor-CU, and the second node is an IAB-node (in the present disclosure, IAB-node may also be referred to as MBSR, VMR, or mobile IAB-node).

In combination with some embodiments of the first aspect, in some embodiments, receiving the first information from the second node includes:
sending second information to the second node, in which the second information is used by the second node to send the first information to the first node.

In the above embodiment, the first node can send the second information to the second node, so that the second node can respond to the second information of the first node and send the above-mentioned first information to the first node. In this way, it is ensured that the first node can obtain information related to the authorization of the mobile IAB-node, so that the first node can determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

In combination with some embodiments of the first aspect, in some embodiments, the second information includes at least one of:
an IAB-node ID, indicating an identifier of an IAB-node of an authorization request, or an identifier of an IAB-MT or an integrated access and backhaul distributed unit (IAB-DU) in an IAB-node of an authorization request;
an authorization information request indication; or
request information related to the authorization.

In the above embodiment, by sending one or more of the IAB-node ID, the authorization information request indication or the request information related to the authorization to the second node, the second node can be helped to send the first information to the first node, thereby ensuring that the first node can obtain the information related to the authorization of the mobile IAB-node, the first node can determine, based on the information, whether the mobile IAB-node is authorized to provide the service to the terminal, and the terminal can use the service provided by the mobile IAB-node, so that the terminal can obtain a better communication connection via the mobile IAB-node, which may ensure the business continuity and access success rate of the terminal and improve the user experience.

In combination with some embodiments of the first aspect, in some embodiments, the first node is an F1-terminating-donor-CU, and the second node is an AMF; and sending the second information to the second node includes:
receiving third information from a third node; and
sending the second information to the second node according to the third information.

In the above embodiment, the first node receives the third information from the third node, and sends the second information to the second node based on the third information, so that the first node can send one or more of the IAB-node ID, the authorization information request indication or the request information related to the authorization to the second node, and the second node can be helped to send the first information to the first node, thereby ensuring that the first node can obtain information related to the authorization of the mobile IAB-node, the first node can determine, based on the information, whether the mobile IAB-node is authorized to provide the service to the terminal, so that the terminal can use the service provided by the mobile IAB-node, and the terminal can obtain a better communication connection via the mobile IAB-node, which may ensure the business continuity and access success rate of the terminal, and improve the user experience.

In combination with some embodiments of the first aspect, in some embodiments, the third information includes at least one of:
an identifier of the second node, indicating an identifier of a donor-CU of an IAB-DU; or
an IAB-node ID.

In some embodiments, the identifier of the second node may be a next generation radio access network node ID (NG-RAN node ID) of the second node; in other embodiments, the identifier of the second node may be an identifier of a cell (NCGI, NR cell global identity) under the second node and a length of an NG-RAN node ID, and the NG-RAN node ID may be determined based on the CGI and the gNB length.

In the above embodiment, the first node can accurately send the second information to the second node via the identifier of the second node and/or the IAB-node ID, thereby improving the accuracy of the information provided by the first node to the second node.

In combination with some embodiments of the first aspect, in some embodiments, the third node is any one of:
an IAB-node; or
an RRC-terminating-donor-CU.

According to a second aspect, the embodiments of the present disclosure provide an authorization method. The method is performed by a second node and includes:
sending first information to a first node, in which the first information is information related to an authorization of a mobile IAB-node, and the first information is used by the first node to determine whether the mobile IAB-node is authorized to provide a service to a user equipment (UE)..

In the above embodiment, the first node can obtain information related to the authorization of the mobile IAB-node, so that the first node can determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

In combination with some embodiments of the second aspect, in some embodiments, the first information includes at least one of:
authorization information;
an IAB-node ID; or
information indicating an authorization failure.

In combination with some embodiments of the second aspect, in some embodiments, the IAB-node ID includes any one of:
a global identifier of an IAB-MT;
a UE ID of an IAB-MT on an XnAP;
a UE ID of an IAB-MT on an NGAP;
a UE ID of an IAB-MT on an F1AP; or
a BAP address.

In combination with some embodiments of the second aspect, in some embodiments, the first node is an F1-terminating-donor-CU, and the second node is an RRC-terminating-donor-CU; or the first node is an F1-terminating-donor-CU, and the second node is an AMF.

In combination with some embodiments of the second aspect, in some embodiments, sending the first information to the first node includes:
receiving second information from the first node, and sending the first information to the first node according to the second information.

In combination with some embodiments of the second aspect, in some embodiments, the second information includes at least one of:
an IAB-node ID, indicating an identifier of an IAB-node of an authorization request, or an identifier of an IAB-MT or an IAB-DU in an IAB-node of an authorization request;
an authorization information request indication; or
request information related to the authorization.

In combination with some embodiments of the second aspect, in some embodiments, sending the first information to the first node includes:
receiving identifier information for an authorization request from a third node; and sending the first information to the first node according to the identifier information.

In combination with some embodiments of the second aspect, in some embodiments, the third node is any one of:
an IAB-node;
an IAB-MT;
an IAB-DU;
an operation administration and maintenance (OAM); or
a donor-CU of an IAB-MT.

In combination with some embodiments of the second aspect, in some embodiments, the identifier information includes at least one of:
an NG-RAN node ID, indicating an ID of a donor-CU of an IAB-DU;
an NCGI and a length of an NG-RAN node ID, indicating an ID of a donor-CU of an IAB-DU; or
an IAB-node ID, indicating an identifier of an IAB-node, or an identifier of an IAB-MT or an IAB-DU in an IAB-node.

In combination with some embodiments of the second aspect, in some embodiments, the first node is an F1-terminating-donor-CU, and the second node is an IAB-node.

In combination with some embodiments of the second aspect, in some embodiments, sending the first information to the first node includes:
receiving the first information from a third node; and sending the first information to the first node.

In combination with some embodiments of the second aspect, in some embodiments, the third node is a donor-CU of an IAB-MT.

According to a third aspect, the embodiments of the present disclosure provide an authorization method. The method is performed by a third node and includes:
sending identifier information for an authorization request to a second node, in which the identifier information is used by the second node to send first information to a first node, the first information is information related to an authorization of a mobile IAB-node, and the first information is used by the first node to determine whether the mobile IAB-node is authorized to provide a service to a user equipment (UE)..

In the above embodiment, by sending, by the third node, the identifier information for an authorization request to the second node, the first node can obtain information related to the authorization of the mobile IAB-node, so that the first node can determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

In combination with some embodiments of the third aspect, in some embodiments, the first information includes at least one of:
authorization information;
an IAB-node ID; or
information indicating an authorization failure.

In combination with some embodiments of the third aspect, in some embodiments, the IAB-node ID includes any one of:
a global identifier of an IAB-MT;
a UE ID of an IAB-MT on an XnAP;
a UE ID of an IAB-MT on an NGAP;
a UE ID of an IAB-MT on an F1AP; or
a BAP address.

In combination with some embodiments of the third aspect, in some embodiments, the identifier information includes at least one of:
an NG-RAN node ID, indicating an ID of a donor-CU of an IAB-DU;
an NCGI and a length of an NG-RAN node ID, indicating an ID of a donor-CU of an IAB-DU; or
an IAB-node ID, indicating an identifier of an IAB-node, or an identifier of an IAB-MT or an IAB-DU in an IAB-node.

In combination with some embodiments of the third aspect, in some embodiments, the first node is an F1-terminating-donor-CU, the second node is an RRC-terminating-donor-CU, and the third node is an OAM; or the first node is an F1-terminating-donor-CU, the second node is an AMF, and the third node is an IAB-MT or an RRC-terminating-donor-CU.

According to a fourth aspect, the embodiments of the present disclosure provide an authorization method. The method is performed by a third node and includes:
sending first information to a first node via a second node, in which the first information is information related to an authorization of a mobile IAB-node, and the first information is used by the first node to determine whether the mobile IAB-node is authorized to provide a service to a user equipment (UE).

In the above embodiment, the third node sends the first information to the first node via the second node, so that the first node can obtain information related to the authorization of the mobile IAB-node, and determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

In combination with some embodiments of the fourth aspect, in some embodiments, the first information includes at least one of:
authorization information;
an IAB-node ID; or
information indicating an authorization failure.

In combination with some embodiments of the fourth aspect, in some embodiments, the IAB-node ID includes any one of:
a global identifier of an IAB-MT;
a UE ID of an IAB-MT on an XnAP;
a UE ID of an IAB-MT on an NGAP;
a UE ID of an IAB-MT on an F1AP; or
a BAP address.

In combination with some embodiments of the fourth aspect, in some embodiments, the first node is an F1-terminating-donor-CU, the second node is an IAB-node, and the third node is a donor-CU of an IAB-MT.

According to a fifth aspect, the embodiments of the present disclosure provide an authorization method. The method is performed by a third node and includes:
sending third information to a first node, in which the third information is used by the first node to send second information to a second node, the second information is used by the second node to send first information to the first node, the first information is information related to an authorization of a mobile IAB-node, and the first information is used by the first node to determine whether the mobile IAB-node is authorized to provide a service to a user equipment (UE).

In the above embodiment, the third node sends the third information to the first node, to enable the first node to send the second information to the second node and enable the second node to send the first information to the first node based on the second information, so that the first node can obtain information related to the authorization of the mobile IAB-node, and determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

In combination with some embodiments of the fifth aspect, in some embodiments, the first information includes at least one of:
authorization information;
an IAB-node ID; or
information indicating an authorization failure.

In combination with some embodiments of the fifth aspect, in some embodiments, the IAB-node ID includes any one of:
a global identifier of an IAB-MT;
a UE ID of an IAB-MT on an XnAP;
a UE ID of an IAB-MT on an NGAP;
a UE ID of an IAB-MT on an F1AP; or
a BAP address.

In combination with some embodiments of the fifth aspect, in some embodiments, the third information includes at least one of:
an identifier of the second node, indicating an identifier of a donor-CU of an IAB-DU; or
an IAB-node ID.

In combination with some embodiments of the fifth aspect, in some embodiments, the first node is an F1-terminating-donor-CU, the second node is an AMF, and the third node is an IAB-node or an RRC-terminating-donor-CU.

According to a sixth aspect, the embodiments of the present disclosure provide an authorization method. The method is performed by a communication system and includes:
sending, by a second node, first information to a first node, in which the first information is information related to an authorization of a mobile IAB-node; and
receiving, by the first node, the first information, and determining , according to the first information, whether the mobile IAB-node is authorized to provide a service to a user equipment (UE).

In the above embodiment, the first node can obtain information related to the authorization of the mobile IAB-node, so that the first node can determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

According to a seventh aspect of the embodiments of the present disclosure, a first communication apparatus is provided, including:
a transceiver module, configured to receive first information from a second node, in which the first information is information related to an authorization of a mobile IAB-node; and
a processing module, configured to determine, according to the first information, whether the mobile IAB-node is authorized to provide a service to a user equipment (UE).

According to an eighth aspect of the embodiments of the present disclosure, a second communication apparatus is provided, including:
a transceiver module, configured to send first information to a first node, in which the first information is information related to an authorization of a mobile IAB-node, and the first information is used by the first node to determine whether the mobile IAB-node is authorized to provide a service to a user equipment (UE).

According to a ninth aspect of the embodiments of the present disclosure, a third communication apparatus is provided, including:
a transceiver module, configured to send identifier information for an authorization request to a second node, in which the identifier information is used by the second node to send first information to a first node, the first information is information related to an authorization of a mobile IAB-node, and the first information is used by the first node to determine whether the mobile IAB-node is authorized to provide a service to a user equipment (UE).

According to a tenth aspect of the embodiments of the present disclosure, a fourth communication apparatus is provided, including:
a transceiver module, configured to send first information to a first node via a second node, in which the first information is information related to an authorization of a mobile IAB-node, and the first information is used by the first node to determine whether the mobile IAB-node is authorized to provide a service to a user equipment (UE).

According to an eleventh aspect of the embodiments of the present disclosure, a fifth communication apparatus is provided, including:
a transceiver module, configured to send third information to a first node, in which the third information is used by the first node to send second information to a second node, the second information is used by the second node to send first information to the first node, the first information is information related to an authorization of a mobile IAB-node, and the first information is used by the first node to determine whether the mobile IAB-node is authorized to provide a service to a user equipment (UE).

According to a twelfth aspect of the embodiments of the present disclosure, a first node is provided, including: one or more processors, in which the processor is configured to call instructions to cause the first node to perform the method of alternative implementations of the first aspect.

According to a thirteenth aspect of the embodiments of the present disclosure, a second node is provided, including: one or more processors, in which the processor is configured to call instructions to cause the second node to perform the method of alternative implementations of the second aspect.

According to a fourteenth aspect of the embodiments of the present disclosure, a first network element is provided, including: one or more processors, in which the processor is configured to call instructions to cause the first network element to perform the method of alternative implementations of the third aspect.

According to a fifteenth aspect of the embodiments of the present disclosure, a third node is provided, including: one or more processors, in which the processor is configured to call instructions to cause the third node to perform the method of alternative implementations of the fourth aspect or the fifth aspect.

According to a sixteenth aspect of the embodiments of the present disclosure, a communication system is provided, including: a first node and a second node. The first node is configured to perform the method of alternative implementations of the first aspect; and the second node is configured to perform the method of alternative implementations of the second aspect.

According to a seventeenth aspect of the embodiments of the present disclosure, a storage medium for storing instructions is provided. When the instructions are executed on a communication apparatus, the communication apparatus is caused to perform the method of alternative implementations of any of the first aspect, the second aspect, the third aspect, the fourth aspect, and the fifth aspect.

According to an eighteenth aspect of the embodiments of the present disclosure, a program product is provided. When the program product is executed on a communication apparatus, the communication apparatus is caused to perform the method of alternative implementations of any of the first aspect, the second aspect, the third aspect, the fourth aspect, and the fifth aspect.

According to a nineteenth aspect of the embodiments of the present disclosure, a computer program is provided. When the computer program is running on a computer, the computer is caused to perform the method of alternative implementations of any of the first aspect, the second aspect, the third aspect, the fourth aspect, and the fifth aspect.

According to a twentieth aspect of the embodiments of the present disclosure, a chip or a chip system is provided. The chip or chip system includes a processing circuit, configured to perform the method of alternative implementations of any of the first aspect, the second aspect, the third aspect, the fourth aspect, and the fifth aspect.

It can be understood that the first node, the second node, the first network element, the communication apparatus, the communication apparatus, the communication system, the storage medium, the program product, the computer program, and the chip or chip system are all used to execute the method proposed in the embodiments of the present disclosure. Therefore, for the beneficial effects that can be achieved, reference may be made to the beneficial effects in the corresponding method, which will not be repeated here.

The embodiments of the present disclosure propose an authorization method and apparatus. In some embodiments, the terms such as authorization method, information processing method, communication method, etc. can be replaced with each other, the terms such as authorization apparatus, information processing apparatus, communication apparatus etc. can be replaced with each other, and the terms such as information processing system, communication system, etc. can be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In some embodiments, the descriptions such as "at least one of A, B, ...", "A and/or B...", "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

In the embodiments of the present disclosure, descriptions such as "A or B..." etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, the terms such as "in response to...", "in response to determining... ", "in the case of...", "at the time of...", "when...", "if...", "provide that..." etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus and the device, etc. can be interpreted as physical or virtual, and their names are not limited to the names recorded in the embodiments. In some cases, they may also be understood as "equipment", "device", "circuit", "network element", "node", "function", "unit", "section", "system", "network", "chip", "chip system", "entity", and "subject".

In some embodiments, the term "network" can be understood as apparatuses included in the network, such as an access network device, a core network device or the like.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, "terminal" or "terminal device" may also be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

In a New Radio (NR) system, IAB supports millimeter wave base stations for wireless access and backhaul, which can effectively reduce the need of adding new fiber deployment when deploying dense networks, and make wireless relay in the NG radio access network (NG-RAN) possible. The relay node is called IAB-node, which supports wireless access and backhaul via NR. A terminating node of NR backhaul on the network side is called IAB-donor, which is a gNB (base station of the 5G network) with an IAB function attached. Backhaul can be performed through single hop or multi-hop.

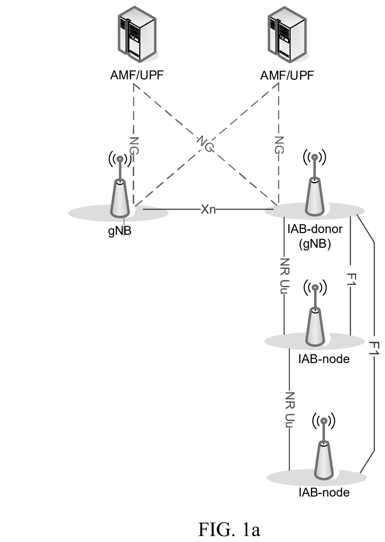

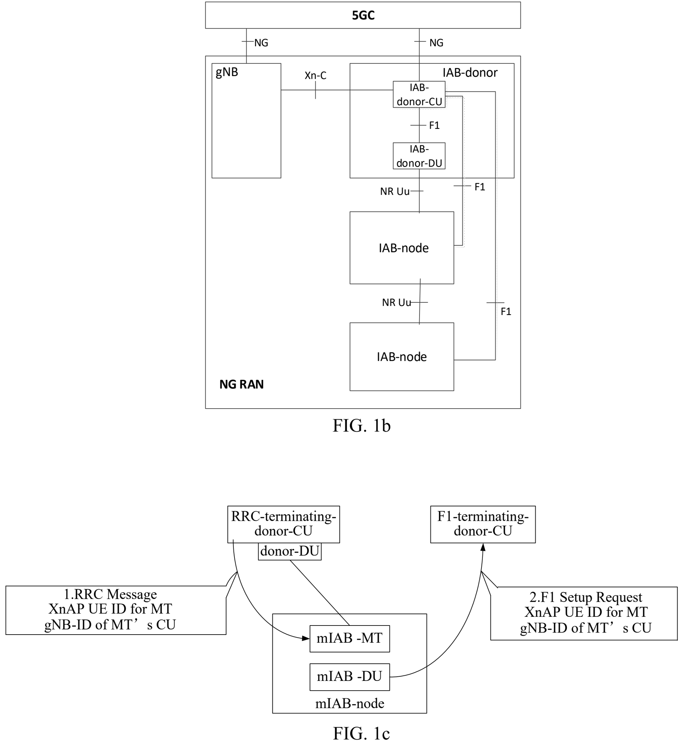

As shown in FIG. 1a and FIG. 1b, the NG-RAN can support IAB by wirelessly connecting the IAB-node to the gNB (called IAB-donor) that can serve the IAB-node. The IAB-donor includes one IAB-donor-CU (centralized unit, also called control unit) and one or more IAB-donor-DUs (distributed units). When a gNB-CU-CP (control plane of CU) and a gNB-CU-UP (user plane of CU) are separated, the IAB-donor may include one IAB-donor-CU-CP, multiple IAB-donor-CU-UPs and multiple IAB-donor-DUs. The IAB-node connects to an upstream IAB-node or IAB-donor-DU via the terminal function subset of an NR Uu interface (called IAB-MT function in the IAB-node). The IAB-node provides wireless backhaul to a downstream IAB-node and a terminal via the network function of the NR Uu interface (called IAB-DU function of the IAB-node). AMF in FIG. 1a is the abbreviation of access and mobility management function, which means access and mobility management function in Chinese; UPF in FIG. 1a is the abbreviation of user plane function, which means user plane function in Chinese.

F1-C service between the IAB-node and the IAB-donor-CU is backhauled via the IAB-donor-DU and an optional intermediate hop IAB-node. F1-U service between the IAB-node and the IAB-donor-CU is backhauled via the IAB-donor-DU and an optional intermediate hop IAB-node.

In some embodiments, in an integration scenario of mobile IAB, such as initial integration, an IAB-MT and an IAB-DU can be integrated into different donor-CUs. For example, as shown in FIG. 1c, F1-terminating-donor-CU can be a donor-CU of an IAB-DU in a mobile IAB-node (mobile IAB-distributed unit, mIAB distributed unit, also called mIAB-DU). RRC-terminating-donor-CU (radio resource control-terminating-donor-centralized unit) can be a donor-CU of an IAB-MT in the mobile IAB-node (also called mIAB-MT). Optionally, as shown in FIG. 1c, the initial integration includes but is not limited to the following steps 1 to 3. Step 1, the mAB-MT, configured as a terminal (UE), accesses the network via the RRC-terminating-donor-CU. Step 2, the mAB-DU sends an F1 connection establishment request to the F1-terminating-donor-CU, so that the mAB-DU establishes an F1 connection with the F1-terminating-donor-CU. For example, the F1 connection establishment request includes a UE ID of the mAB-MT on an XnAP (i.e., XnAP UE ID), and the F1 connection establishment request may also include an identifier for indicating the donor-CU of the mAB-MT. Step 3, the F1-terminating-donor-CU sends a TMM (Transport Migration Management) procedure to the RRC-terminating-donor-CU to establish a transmission channel.

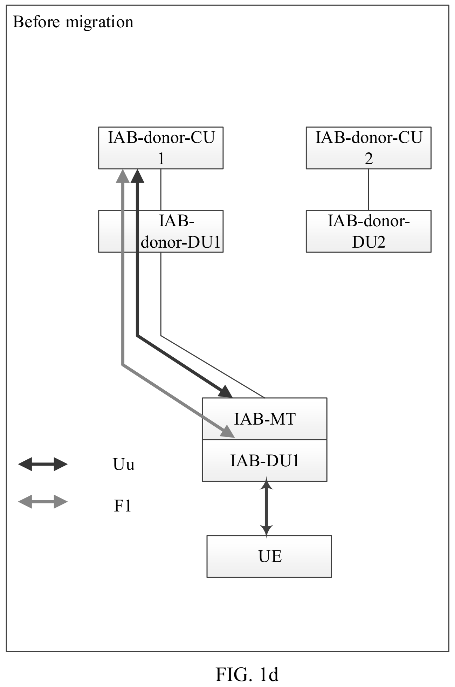

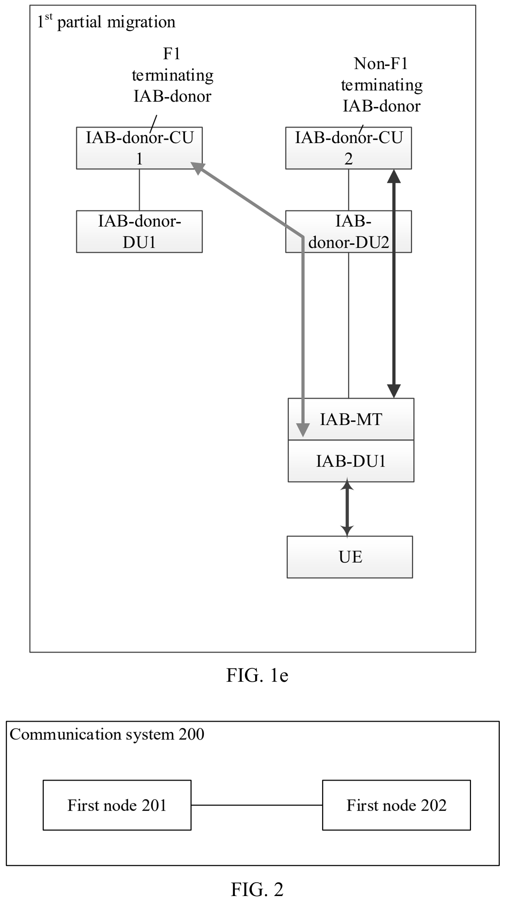

In some embodiments, after the initial integration, after partial migration or DC migration (DU migration), the IAB-MT and the IAB-DU may also migrate to different donor-CUs. For example, as shown in FIG. 1d, before the migration, the donor-CU of the IAB-MT is IAB-donor-CU 1, and the donor-DU of the IAB-DU is IAB-donor-DU 1. As shown in FIG. 1e, after partial migration, the IAB-MT migrates to IAB-donor-CU 2, and the IAB-DU migrates to IAB-donor-CU 1, so that the IAB-MT and the IAB-DU migrate to different donor-CUs.

In some embodiments, for an MBSR (also called mobile IAB-node), subscription information stored in a home public land mobile network (HPLMN) indicates whether it is authorized to operate as an MBSR, and the corresponding location and time periods.

In some embodiments, when MBSR roaming is supported, a roaming agreement between the VPLMN and the HPLMN regarding an MBSR operation is in place, and the SGC can make use of it for authorization of the MBSR in the VPLMN. The MBSR (IAB-DU) can use an IAB-node integration procedure or inter-IAB-donor gNB mobility procedure to integrate into the VPLMN to provide services.

In some embodiments, the MBSR (IAB-UE) is assumed to be configured with preferred PLMN lists and forbidden PLMNs by the HPLMN for the MBSR operation.

In some embodiments, when the MBSR (IAB-UE) performs initial registration with the serving public land mobile network (PLMN), it indicates a request for operating as the MBSR. The AMF authorizes the MBSR based on the subscription information and provides an MBSR authorization indication to the NG-RAN. The MBSR uses configuration information for the MBSR operation to establish a connection to an operation administration and maintenance (OAM) system.

In some embodiments, as part of the registration procedure, the AMF for the MBSR may indicate to the MBSR IAB-UE (also referred to as IAB-MT) that it is not allowed to act as an MBSR IAB-node, and in this case, the AMF does not include an MBSR authorization indication to the donor gNB. The AMF may provide an indication in a registration accept message (if the PLMN allows the MBSR IAB-UE to register in the PLMN) or in a registration reject message (if the PLMN does not allow the MBSR IAB-UE to register in the PLMN).

However, when the donor-CU of the IAB-MT is different from the donor-CU of the IAB-DU, how to enable the mobile IAB-node s corresponding to the IAB-MT and the IAB-DU to provide services to the terminal has become an urgent problem to be solved.

Accordingly, embodiments of the present disclosure provide an authorization method and apparatus, the first node can obtain information related to the authorization of the mobile IAB-node, so that the first node can determine, based on the information, whether the mobile IAB-node is authorized to provide the service to the terminal, and the terminal can use the service provided by the mobile IAB-node, thereby enabling the terminal to obtain a better communication connection via the mobile IAB-node, ensuring the business continuity and access success rate of the terminal, and improving the user experience.

In order to better understand an authorization method disclosed in the embodiments of the present disclosure, the communication system to which the embodiments of the present disclosure is applicable is described below.

FIG. 2 is a schematic diagram of a communication system according to an embodiment of the present disclosure. As shown in FIG. 2, the communication system 200 includes a first node 201 and a second node 202.

In some embodiments, the first node 201 includes, for example, but is not limited to at least one of an F1-terminating-donor-CU or an RRC-terminating-donor-CU. Optionally, the F1-terminating-donor-CU may be a donor-CU (donor-centralized unit, also called donor-control unit) of an IAB-DU in a mobile IAB-node (mobile IAB-distributed unit, mIAB distributed unit, also called mIAB-DU). The RRC-terminating-donor-CU may be a donor-CU of an IAB-MT in a mobile IAB-node (also called mIAB-MT). The mobile IAB-node may be a movable IAB-node.

In some embodiments, the second node 202 includes but is not limited to, for example, at least one of an RRC-terminating-donor-CU or an F1-terminating-donor-Cu.

For example, the first node 201 may be an F1-terminating-donor-CU, and the second node 202 may be an RRC-terminating-donor-CU. Alternatively, for example, the first node 201 may be an RRC-terminating-donor-CU, and the second node 202 may be an F1-terminating-donor-CU.

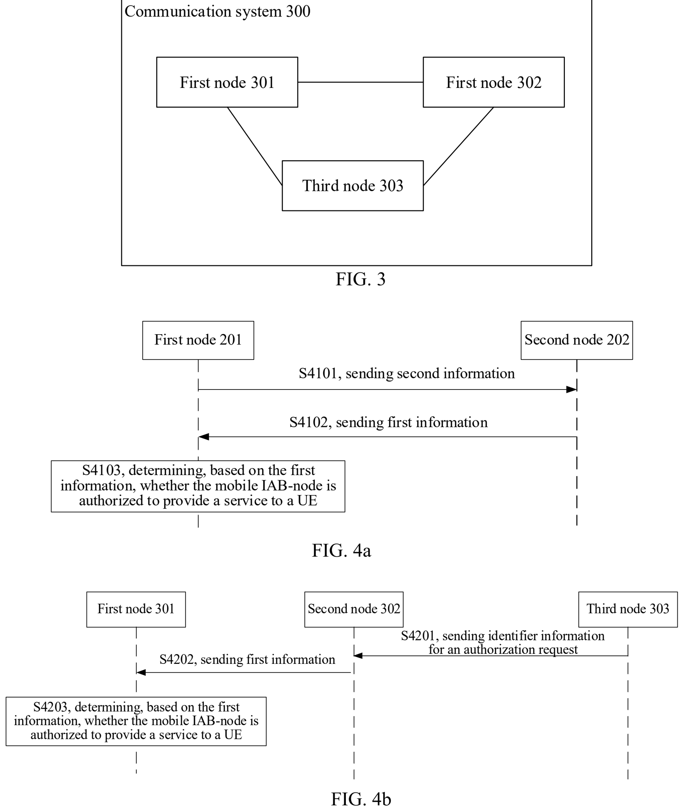

FIG. 3 is a schematic diagram of a communication system according to an embodiment of the present disclosure. As shown in FIG. 3, the communication system 300 includes a first node 301, a second node 302 and a third node 303.

In some embodiments, the first node 301 includes, for example, but is not limited to at least one of an F1-terminating-donor-CU or an RRC-terminating-donor-CU. Optionally, the F1-terminating-donor-CU may be a donor-CU of an IAB-DU in a mobile IAB-node. The RRC-terminating-donor-CU may be a donor-CU of an IAB-MT in a mobile IAB-node (also called mIAB-MT). The mobile IAB-node may be a movable IAB-node.

In some embodiments, the second node 302 includes but is not limited to, for example, at least one of an RRC-terminating-donor-CU, a first network element or an IAB-node. The network element may be virtual or physical. The first network element may be a network element in a core network device, and the core network device may be a device including the first network element, a second network element, etc., or may be a plurality of devices or a group of devices, respectively including all or part of the first network element, the second network element, etc. The core network includes, for example, at least one of an Evolved Packet Core (EPC), a 5G Core Network (5GCN), or a Next Generation Core (NGC).

In some embodiments, the first network element is, for example, an access and mobility management function (AMF).

In some embodiments, the first network element is a control plane entity in the core network, which is mainly responsible for user mobility management, including: registration and temporary identity allocation; idle (IDLE) and connected (CONNECT) states maintenance and state migration; switching in the CONNECT state; triggering paging in the user IDLE state and other functions.

In some embodiments, the second network element is, for example, a user plane function (UPF).

In some embodiments, the second network element is a user plane functional entity in the core network, which is responsible for forwarding user data packets and also performs statistics on user data packets for functions such as charging.

In some embodiments, the third node 303 includes but is not limited to, for example, at least one of an IAB-MT, an OAM, an RRC-terminating-donor-CU, or an IAB-node.

In some embodiments, the OAM is mainly used to detect link quality and service quality of the operator network.

For example, the first node 301 may be an F1-terminating-donor-CU, the second node 302 may be an RRC-terminating-donor-CU, and the third node 303 may be an IAB-MT.

For example, the first node 301 may be an F1-terminating-donor-CU, the second node 302 may be an RRC-terminating-donor-CU, and the third node 303 may be an OAM.

For example, the first node 301 may be an F1-terminating-donor-CU, the second node 302 may be the first network element, and the third node 303 may be an RRC-terminating-donor-CU.

For example, the first node 301 may be an F1-terminating-donor-CU, the second node 302 may be the first network element, and the third node 303 may be an IAB-MT.

For example, the first node 301 may be an F1-terminating-donor-CU, the second node 302 may be the first network element, and the third node 303 may be an IAB-node.

For example, the first node 301 may be an F1-terminating-donor-CU, the second node 302 may be an IAB-node, and the third node 303 may be an RRC-terminating-donor-CU.

It can be understood that the communication system described in the embodiments of the present disclosure is described for the purpose of more clearly illustrating the technical solution of the embodiments of the present disclosure, and does not constitute a limitation on the technical solution provided by the embodiments of the present disclosure. A person skilled in the art may know that with the evolution of the system architecture and the emergence of new business scenarios, the technical solution provided by the embodiments of the present disclosure is also applicable to similar technical problems.

The following embodiments of the present disclosure may be applied to the communication system 100 or some entities shown in FIG. 2, and may also be applied to the communication system 200 or some entities shown in FIG. 3, but are not limited thereto. The entities shown in FIG. 2 are examples, and the communication system may include all or some of the entities in FIG. 2, and may also include other entities other than those in FIG. 2. The entities shown in FIG. 3 are examples, and the communication system may include all or some of the entities in FIG. 3, and may also include other entities other than those in FIG. 3. The number and form of each entity are arbitrary, and each entity may be physical or virtual. The connection relationship between the entities is an example, and the entities may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems based on them, etc. In addition, multiple systems can also be combined (for example, a combination of LTE or LTE-A and 5G, etc.) for application.

The terminal device in each embodiment of the present disclosure is an entity on the user side for receiving or transmitting signals, such as a mobile phone. The terminal device may also be referred to as a terminal, user equipment (UE), mobile station (MS), mobile terminal (MT), etc. The terminal may be a car with communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form adopted by the terminal.

FIG. 4a is an interaction diagram of an authorization method according to an embodiment of the present disclosure. As shown in FIG. 4a, the embodiment of the present disclosure involves an authorization method applied in the above communication system 200. The method may include the following steps.

At step S4101, the first node 201 sends second information to the second node 202.

In some embodiments, the second information may be authorization request information. In some embodiments, the second information includes at least one of: an IAB-node ID, used to indicate an identifier of an IAB-node of an authorization request, or an identifier of an IAB-MT or an IAB-DU in the IAB-node; an authorization information request indication; or request information related to the authorization. For example, the request information related to the authorization may be a transport migration management request.

At step S4102, the second node 202 sends first information to the first node 201 according to the second information sent by the second node 202.

In some embodiments, the first node 201 may be an F1-terminating-donor-CU, and the second node 202 may be an RRC-terminating-donor-CU. In response to the second information sent by the first node 201, the second node 202 sends the first information to the first node 201, and the second information may include at least one of the IAB-node ID or the authorization information request indication. Optionally, in one implementation, the second node 202 may receive the first information from an AMF via an NGAP message. The RRC-terminating-donor-CU is a donor-CU of the IAB-MT in the IAB-node. If the RRC-terminating-donor-CU (the second node 202) and the F1-terminating-donor-CU (the first node 201) are different NG-RAN nodes, the second node 202 determines a gNB ID of the first node 202. For example, the second node 202 may determine a gNB ID of the F1-terminating-donor-CU via an XnAP message received from the first node 201, that is, the F1-terminating-donor-CU sends the XnAP message to the RRC-terminating-donor-CU, the XnAP message includes the second information, and the second information includes a UE ID of the IAB-MT, which is used to indicate an ID assigned to the IAB-MT (or IAB-node) by the F1-terminating-donor-CU of the IAB-DU co-located with the IAB-MT. The IAB-MT UE ID is the XnAP UE ID.

In some embodiments, the second node 202 sends the first information to the first node 201 via an XnAP message.

In some embodiments, the first information may be information related to the authorization of the mobile IAB-node. In some embodiments, the first information may include at least one of: authorization information; an IAB-node ID; or information indicating an authorization failure. The IAB-node ID is an identifier for indicating an IAB-node, or an IAB-DU or IAB-MT in an IAB-node.

In some embodiments, the information indicating the authorization failure may be a cause value in the request failure, for example, the cause value is set to "not authorized".

In some embodiments, the terms "authorization information", "mobile IAB authorization information", etc. may be interchangeable.

In some embodiments, the first node 201 may be an F1-terminating-donor-CU, and the second node 202 may be an RRC-terminating-donor-CU. In response to the second information sent by the first node 201, the second node 202 sends the first information to the first node 201, and the second information may include request information related to the authorization (Transport Migration Management request), and the request information related to the authorization may be a transport migration management request. For example, the second node 202 sends a transport migration management request to the first node 201.

At step S4103, the first node 201 determines, based on the first information, whether the mobile IAB-node is authorized to provide a service to a UE.

In some embodiments, the first node 201 receives the first information sent by the second node 202, and may save the first information, such as saving at least one of the authorization information, the IAB-node ID, or the information indicating the authorization failure in the first information. The first node 201 may use the first information for the mobile IAB-DU accordingly. For example, the first node 201 may store the received mobile IAB authorization information in the UE context, and use it for the mobile IAB-MT accordingly.

In some embodiments, the first node 201 may be an F1-terminating-donor-CU, and the second node 202 may be an RRC-terminating-donor-CU. If a mobile IAB authorization information element (IE) is set to "not authorized", the F1-terminating-donor-CU initiates an operation with support to ensure that the mobile IAB-node does not provide the service to any UE. If the mobile IAB authorization information element (IE) is set to "authorized", the F1-terminating-donor-CU initiates an operation with support to ensure that the mobile IAB-node can provide the service to the UE. For example, if the mobile IAB authorization IE of the mobile IAB-MT is set to "not authorized", the NG-RAN node initiates an action with support to ensure that the mobile IAB-node does not provide the service to any UE. The service can be understood as a service provided by the mobile IAB-node, for example, the IAB-DU of the mobile IAB-node can establish an F1 connection with the donor-CU of the IAB-DU, the mobile IAB-node broadcasts that it is a mobile IAB-node and can provide the service to the UE, or the mobile IAB-node provides the service for UE access, etc.

In some embodiments, the first node 201 may be an F1-terminating-donor-CU, and the second node 202 may be an RRC-terminating-donor-CU. In response to the second information sent by the first node 201, the second node 202 sends the first information to the first node 201, and the second information may include request information related to the authorization (for example, the request information related to the authorization is request information related to transport migration management, and the information is included in the Transport Migration Management request). For example, the second node 202 sends the transport migration management request to the first node 201. If the requested authorization information of the IAB-MT is "not authorized", the RRC-terminating-donor-CU sends the first information to the F1-terminating-donor-CU, the first information may include a transport migration management rejection message, and the rejection message carries a cause value which is set to "not authorized". The F1-terminating-donor-CU may determine whether the mobile IAB-node is authorized to provide the service to the UE based on the first information. For example, the F1-terminating-donor-CU determines that the mobile IAB-node is not authorized to provide the service to the UE based on the received transport migration management rejection message. If the requested authorization information of the IAB-MT is "authorized", the RRC-terminating-donor-CU sends a transport migration management feedback message to the F1-terminating-donor-CU in response to the transport migration management request. For example, the F1-terminating-donor-CU determines that the mobile IAB-node is authorized to provide the service to the UE based on the received transport migration management feedback message.

In some embodiments, if a transport migration management procedure has been executed and the authorization information is changed (for example, the authorization information changes from "authorized" to "not authorized", or the authorization information changes from "not authorized" to "authorized"), the RRC-terminating-donor-CU sends an XnAP message to the F1-terminating-donor-CU, and the XnAP message includes information for indicating an authorization update.

In some embodiments, reference may be made to other optional implementations described before or after the description corresponding to FIG. 4a.

FIG. 4b is an interaction diagram of an authorization method according to an embodiment of the present disclosure. As shown in FIG. 4b, the embodiment of the present disclosure involves an authorization method applied in the above communication system 300. The method may include the following steps.

At step S4201, the third node 303 sends identifier information for an authorization request to the second node 302.

In some embodiments, the identifier information for the authorization request includes at least one of:
an NG-RAN node ID, used to indicate an identifier of a donor-CU of an IAB-DU;
an NCGI and a length of an NG-RAN node ID, used to indicate an identifier of a donor-CU of an IAB-DU; or
an IAB-node ID, used to indicate an identifier of an IAB-node or an identifier of an IAB-MT or IAB-DU in an IAB-node.

In some embodiments, the above-mentioned terms such as "NG-RAN node ID", "gNB ID" etc. may be interchangeable.

In some embodiments, the third node 303 may be any one of: an IAB-node; an IAB-MT; an IAB-DU; an OAM; or a donor-CU of an IAB-MT.

At step S4202, the second node 302 sends first information to the first node 301 according to the identifier information for the authorization request.

In some embodiments, the first information is information related to an authorization of a mobile IAB-node. In some embodiments, the first information includes at least one of: authorization information; an IAB-node ID; or information indicating an authorization failure.

In some embodiments, the information indicating the authorization failure may be a cause value in the request failure, for example, the cause value is set to "not authorized".

In some embodiments, the IAB-node ID includes any one of: a global identifier of an IAB-MT; a UE ID of an IAB-MT on an XnAP (i.e., XnAP UE ID); a UE ID of an IAB-MT on an NGAP (i.e., NGAP UE ID); a UE ID of an IAB-MT on an F1AP (i.e., F1AP UE ID); or a backhaul adaptation protocol address (BAP address).

In some embodiments, the first node 301 may be an F1-terminating-donor-CU, the second node 302 may be an RRC-terminating-donor-CU, and the third node 303 may be an IAB-MT or an OAM.

In some embodiments, the first node 301 may be an F1-terminating-donor-CU, the second node 302 may be an AMF, and the third node 303 may be an RRC-terminating-donor-CU or an IAB-MT.

At step S4203, the first node 301 determines, based on the first information, whether the mobile IAB-node is authorized to provide a service to a UE.

In some embodiments, the first node 301 receives the first information sent by the second node 302, and may save the first information, such as saving at least one of the authorization information, the IAB-node ID, or the information indicating the authorization failure in the first information. The first node 301 may use the first information for the mobile IAB-DU accordingly. For example, the first node 301 may store the received mobile IAB authorization information in the UE context, and use it for the mobile IAB-MT accordingly.

In some embodiments, the information indicating the authorization failure may be a cause value in the request failure, for example, the cause value is set to "not authorized".

In some embodiments, the first node 301 may be an F1-terminating-donor-CU, and the second node 302 may be an RRC-terminating-donor-CU. If a mobile IAB authorization information element (IE) is set to "not authorized", the F1-terminating-donor-CU initiates an operation with support to ensure that the mobile IAB-node does not provide the service to any UE. For example, if the mobile IAB authorization IE of the mobile IAB-MT is set to "not authorized", the NG-RAN node initiates an action with support to ensure that the mobile IAB-node does not provide the service to any UE. The service can be understood as a service provided by the mobile IAB-node, for example, the mobile IAB-node provides the service for UE access, etc.

In some embodiments, if a transport migration management procedure has been executed and the authorization information is changed (for example, the authorization information changes from "authorized" to "not authorized"), the RRC-terminating-donor-CU sends an XnAP message to the F1-terminating-donor-CU, and the XnAP message includes information for indicating an authorization update.

In some embodiments, reference may be made to other optional implementations described before or after the description corresponding to FIG. 4b.

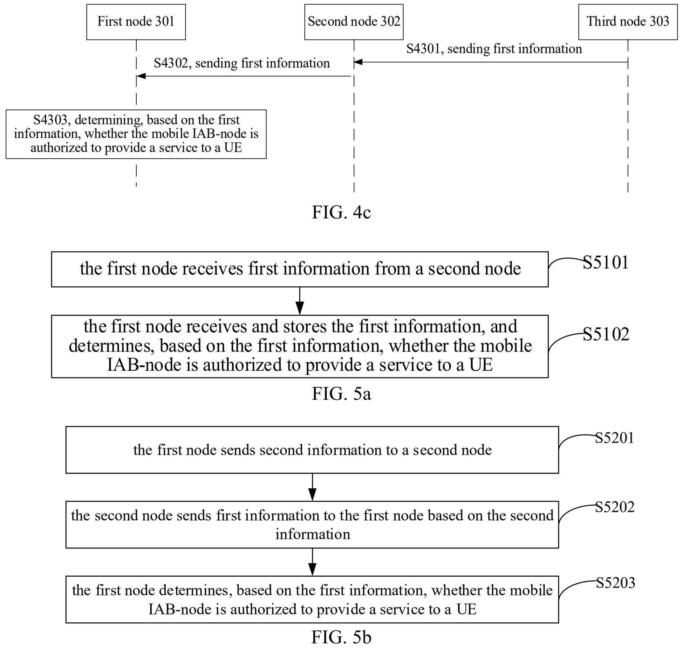

FIG. 4c is an interaction diagram of an authorization method according to an embodiment of the present disclosure. As shown in FIG. 4c, the embodiment of the present disclosure involves an authorization method applied in the above communication system 300. The method may include the following steps.

At step S4301, the third node 303 sends first information to the second node 302.

In some embodiments, the first information is information related to authorization of a mobile IAB-node. In some embodiments, the first information includes at least one of: authorization information; an IAB-node ID; or information indicating an authorization failure. The IAB-node ID is an identifier for indicating an IAB-node, or an IAB-MT or IAB-DU in an IAB-node.

In some embodiments, the information indicating the authorization failure may be a cause value in the request failure, for example, the cause value is set to "not authorized".

In some embodiments, terms such as "authorization information", "mobile IAB authorization information" etc. may be interchangeable.

In some embodiments, the third node 303 may be a donor-CU of the IAB-MT. For example, the third node 303 may be an RRC-terminating-donor-CU; the second node 302 may be an IAB-node. In one implementation, the RRC-terminating-donor-CU sends the first information to the IAB-MT in the IAB-node via an RRC message. That is, the IAB-MT in the IAB-node receives the first information from the RRC-terminating-donor-CU via an RRC message.

At step S4302, the second node 302 sends the first information to the first node 301.

In some embodiments, the first node 301 may be an F1-terminating-donor-CU.

In some embodiments, the second node 302 may be an IAB-node. In one implementation, the IAB-DU in the IAB-node sends the first information to the F1-terminating-donor-CU via an F1AP message.

In some embodiments, the IAB-node may also be an MBSR, a VMR, or a mobile IAB-node.

At step S4303, the first node 301 determines, based on the first information, whether the mobile IAB-node is authorized to provide a service to a UE.

In some embodiments, the first node 301 receives the first information sent by the second node 302, and may save the first information, such as saving at least one of the authorization information, the IAB-node ID, or the information indicating the authorization failure in the first information. The first node 301 may use the first information for the mobile IAB-DU accordingly. For example, the first node 301 may store the received mobile IAB authorization information in the UE context, and use it for the mobile IAB-MT accordingly.

In some embodiments, the information indicating the authorization failure may be a cause value in the request failure, for example, the cause value is set to "not authorized".

In some embodiments, the first node 301 may be an F1-terminating-donor-CU, and the second node 302 may be an IAB-node. If a mobile IAB authorization information element (IE) of the IAB-MT is set to "not authorized", the F1-terminating-donor-CU initiates an operation with support to ensure that the mobile IAB-node does not provide the service to any UE. For example, if the mobile IAB authorization IE of the mobile IAB-MT is set to "not authorized", the NG-RAN node initiates an action with support to ensure that the mobile IAB-node does not provide the service to any UE; if the mobile IAB authorization IE is set to "authorized", the F1-terminating-donor-CU initiates an operation with support to ensure that the mobile IAB-node can provide the service to the UE. The service can be understood as a service provided by the mobile IAB-node, for example, the IAB-DU of the mobile IAB-node can establish an F1 connection with the donor-CU of the IAB-DU, the mobile IAB-node broadcasts that it is a mobile IAB-node and can provide the service to the UE, or the mobile IAB-node provides the service for UE access, etc.

In some embodiments, if a transport migration management procedure has been executed and the authorization information is changed (for example, the authorization information changes from "authorized" to "not authorized", or the authorization information changes from "not authorized" to "authorized"), the RRC-terminating-donor-CU sends an XnAP message to the F1-terminating-donor-CU, and the XnAP message includes information for indicating an authorization update.

In some embodiments, reference may be made to other optional implementations described before or after the description corresponding to FIG. 4c.

FIG. 5a is an interaction diagram of an authorization method according to an embodiment of the present disclosure. As shown in FIG. 5a, the embodiment of the present disclosure involves an authorization method performed by a first node. The method may include the following steps.

At step S5101, the first node receives first information from a second node, in which the first information is information related to an authorization of a mobile IAB-node.

In some embodiments, the first information may include at least one of: authorization information; an IAB-node ID; or information indicating an authorization failure. The IAB-node ID is an identifier for indicating an IAB-node, or an IAB-DU or IAB-MT in an IAB-node.

In some embodiments, the IAB-node ID includes any one of: a global identifier of an IAB-MT; a UE ID of an IAB-MT on an XnAP (i.e., XnAP UE ID); a UE ID of an IAB-MT on an NGAP (i.e., NGAP UE ID); a UE ID of an IAB-MT on an F1AP (i.e., F1AP UE ID); or a BAP address.

In some embodiments, the IAB-node ID may include the global identifier of the IAB-MT. The global identifier of the IAB-MT may be, for example, a Generic Public Subscription Identifier (GPSI), but is not limited thereto.

In some embodiments, the information indicating the authorization failure may be a cause value in the request failure, for example, the cause value is set to "not authorized".

In some embodiments, the first node may be an F1-terminating-donor-CU, and the second node may be an RRC-terminating-donor-CU. The first information is included in an XnAP message sent by the RRC-terminating-donor-CU to the F1-terminating-donor-CU.

In some embodiments, the first node may be an F1-terminating-donor-CU, and the second node may be an AMF first network element. The first information is included in an NGAP message sent by the AMF to the F1-terminating-donor-CU.

In some embodiments, the first node may be an F1-terminating-donor-CU, and the second node may be an IAB-node. The first information is included in an F1AP message sent by an IAB-DU in the IAB-node to the F1-terminating-donor-CU.

Step S5102, the first node receives and stores the first information, and determines, based on the first information, whether the mobile IAB-node is authorized to provide a service to a UE.

In some embodiments, the first node receives the first information sent by the second node, and may store the first information, such as storing at least one of the authorization information, the IAB-node ID, or the information indicating the authorization failure in the first information. The first node may use the first information for the mobile IAB-DU accordingly. For example, the first node may store the received mobile IAB authorization information in the UE context, and use it for the mobile IAB-MT or the mobile IAB-node accordingly.

In some embodiments, the first node may be an F1-terminating-donor-CU, and the second node may be an RRC-terminating-donor-CU. If a mobile IAB authorization information element (IE) is set to "not authorized", the F1-terminating-donor-CU initiates an operation with support to ensure that the mobile IAB-node does not provide the service to any UE. For example, if the mobile IAB authorization IE of the mobile IAB-MT is set to "not authorized", the NG-RAN node initiates an action with support to ensure that the mobile IAB-node does not provide the service to any UE. The service can be understood as a service provided by the mobile IAB-node, for example, the IAB-DU of the mobile IAB-node can establish an F1 connection with the donor-CU of the IAB-DU, the mobile IAB-node broadcasts that it is a mobile IAB-node and can provide the service to the UE, or the mobile IAB-node provides the service for UE access, etc.

In some embodiments, the first node may be an F1-terminating-donor-CU, and the second node may be an RRC-terminating-donor-CU. If the authorization IE in the first information is set to "authorized", the F1-terminating-donor-CU initiates an operation with support to ensure that the mobile IAB-node can provide the service to the UE or a specific UE. For example, the IAB-DU of the mobile IAB-node can establish an F1 connection with the donor-CU of the IAB-DU, the mobile IAB-node broadcasts that it is a mobile IAB-node and can provide the service to the UE, or the mobile IAB-node provides the service for UE access, etc.

In some embodiments, a setting value of the authorization IE may be "not authorized", "authorized", or other names, which are used to indicate whether the mobile IAB-node is authorized to provide the service to the UE, which is not limited in the present disclosure.

In some embodiments, the first node may be an F1-terminating-donor-CU, and the second node may be an RRC-terminating-donor-CU. The second node receives second information sent by the first node and sends the first information to the first node. The second information may include one or more of request information related to the authorization (Transport Migration Management request), an authorization information request indication, or an IAB-node ID. The request information related to the authorization may be a transport migration management request. The IAB-node ID may be used to indicate an IAB-node of an authorization request, or an identifier of an IAB-MT or IAB-DU in an IAB-node. For example, the second node sends a transport migration management request to the first node. If the requested authorization information of the IAB-MT is "not authorized", the RRC-terminating-donor-CU sends the first information to the F1-terminating-donor-CU, the first information may include a transport migration management rejection message, and the rejection message carries a cause value which is set to "not authorized". The F1-terminating-donor-CU may determine whether the mobile IAB-node is authorized to provide the service to the UE based on the first information. For example, the F1-terminating-donor-CU determines that the mobile IAB-node is not authorized to provide the service to the UE based on the received transport migration management rejection message.

In some embodiments, if a transport migration management procedure has been executed and the authorization information is changed (for example, the authorization information changes from "authorized" to "not authorized", or the authorization information changes from "not authorized" to "authorized"), the RRC-terminating-donor-CU sends an XnAP message to the F1-terminating-donor-CU, and the XnAP message includes information for indicating an authorization update.

FIG. 5b is an interaction diagram of an authorization method according to an embodiment of the present disclosure. As shown in FIG. 5b, the embodiment of the present disclosure involves an authorization method performed by a first node. The method may include the following steps.

At step S5201, the first node sends second information to a second node.

In some embodiments, the second information may be authorization request information. In some embodiments, the second information includes at least one of: an IAB-node ID, used to indicate an identifier of an IAB-node of an authorization request, or an identifier of an IAB-MT or IAB-DU in the IAB-node; an authorization information request indication; or request information related to an authorization. For example, the request information related to the authorization may be a Transport Migration Management request.

In some embodiments, the first node may be an F1-terminating-donor-CU, and the second node may be an RRC-terminating-donor-CU. For example, the F1-terminating-donor-CU may send the second information to the RRC-terminating-donor-CU. The second information may include the IAB-node ID. For example, the IAB-node ID may be a UE ID of the IAB-MT, which is used to indicate an ID assigned to the IAB-MT (or IAB-node) by the F1-terminating-donor-CU of the IAB-DU co-located with the IAB-MT. The IAB-MT UE ID may be an XnAP UE ID.

In some embodiments, the second information may be an XnAP message or the second information may be included in an XnAP message. Optionally, the F1-terminating-donor-CU may send the second information to the RRC-terminating-donor-CU via an XnAP message.

In some embodiments, the first node may be an F1-terminating-donor-CU, and the second node may be an RRC-terminating-donor-CU. For example, the F1-terminating-donor-CU may send the second information to the RRC-terminating-donor-CU. The second information may include the request information related to the authorization. For example, the request information related to the authorization may be a transport migration management request. Optionally, in one implementation, the F1-terminating-donor-CU may send a transport migration management request to the RRC-terminating-donor-CU.

At step S5202, the second node sends first information to the first node based on the second information.

In some embodiments, the first node may be an F1-terminating-donor-CU, and the second node may be an RRC-terminating-donor-CU. The second information may include the IAB-node ID. The IAB-node ID may be a UE ID of the IAB-MT (i.e., IAB-MT UE iD), which is used to indicate an ID assigned to the IAB-MT (or IAB-node) by the F1-terminating-donor-CU of the IAB-DU co-located with the IAB-MT. After the RRC-terminating-donor-CU receives an XnAP message sent by the F1-terminating-donor-CU, the RRC-terminating-donor-CU may determine a gNB ID of the F1-terminating-donor-CU, and the RRC-terminating-donor-CU may send the first information to the F1-terminating-donor-CU based on the gNB ID of the F1-terminating-donor-CU and/or IAB-node ID. The gNB ID may be determined based on the XnAP message, and the IAB-node ID is used to determine a specific IAB-MT, and then the authorization information corresponding to the specific IAB-MT may be obtained.

In some embodiments, the first node may be an F1-terminating-donor-CU, and the second node may be an RRC-terminating-donor-CU. The second information may include the request information related to the authorization. For example, the request information related to the authorization may be a transport migration management request. After the RRC-terminating-donor-CU receives the transport migration management request sent by the F1-terminating-donor-CU, the RRC-terminating-donor-CU may send the first information to the F1-terminating-donor-CU according to the transport migration management request.

In some embodiments, the transport migration management request may include the requested authorization information of the IAB-MT. For example, if the requested authorization information of the IAB-MT is "not authorized", the RRC-terminating-donor-CU sends the first information to the F1-terminating-donor-CU, the first information may include a transport migration management rejection message, and the transport migration management rejection message carries a cause value which is set to "not authorized". If the requested authorization information of the IAB-MT is "authorized", the RRC-terminating-donor-CU sends the first information to the F1-terminating-donor-CU, the first information may include a transport migration management accept message, and the transport migration management accept message may carry a cause value which is set to "authorized".

At step S5203, the first node determines, based on the first information, whether the mobile IAB-node is authorized to provide a service to a UE.

In embodiments of the present disclosure, the implementation of step S5203 may be implemented in part or in whole adopting the method of step S5102 in the above embodiments, which is not limited here and will not be described in detail.

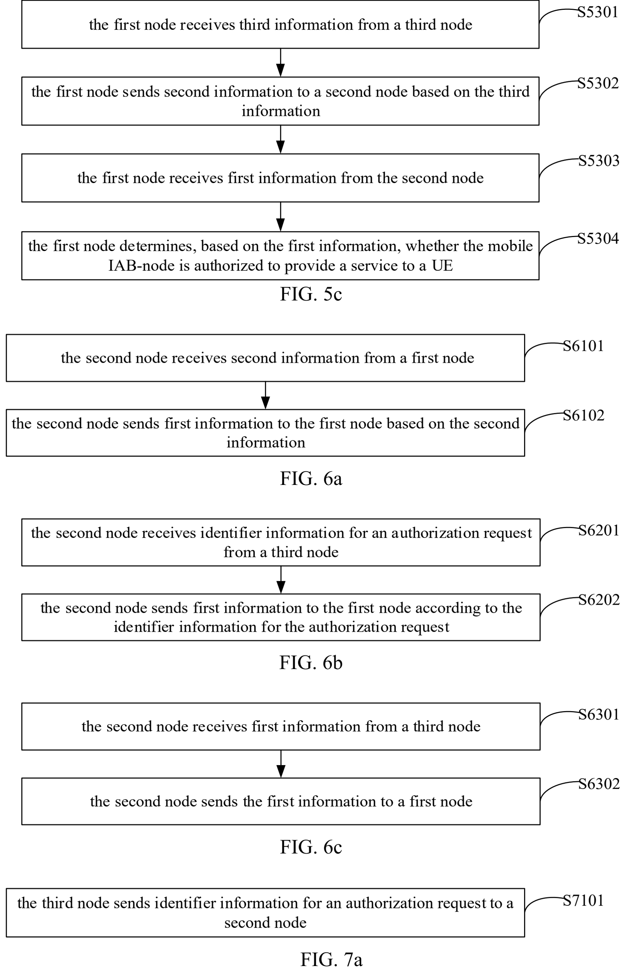

FIG. 5c is an interaction diagram of an authorization method according to an embodiment of the present disclosure. As shown in FIG. 5c, the embodiment of the present disclosure involves an authorization method performed by a first node. The method may include the following steps.

At step S5301, the first node receives third information from a third node.

In some embodiments, the third information may include at least one of: an identifier of a second node, used to indicate an identifier of a donor-CU of an IAB-DU; or an IAB-node ID.

In some embodiments, the identifier of the second node may be an NG-RAN node ID of the second node; in other embodiments, the identifier of the second node may be an identifier (such as NCGI, NR cell global identity) of a cell under the second node and a length of an NG-RAN node ID, in which the NG-RAN node ID can be determined based on the CGI and the length of the gNB.

In some embodiments, the first node may be an F1-terminating-donor-CU. In some embodiments, the third node may be any one of: an IAB-node; or an RRC-terminating-donor-CU.

At step S5302, the first node sends second information to a second node based on the third information.

In some embodiments, the second information may be authorization request information. In some embodiments, the second information includes at least one of: an IAB-node ID, used to indicate an identifier of an IAB-node of an authorization request, or an identifier of an IAB-MT or IAB-DU in the IAB-node; an authorization information request indication; or request information related to an authorization. For example, the request information related to the authorization may be a Transport Migration Management request.

In some embodiments, the first node may be an F1-terminating-donor-CU, the second node may be an AMF, and the third node may be an RRC-terminating-donor-CU. For example, the F1-terminating-donor-CU may receive the third information from the RRC-terminating-donor-CU. The third information may include an IAB-node ID and/or an AMF ID. The IAB-node ID may be a UE ID of the IAB-MT (i.e., IAB-MT UE ID).

In some embodiments, the third information may be an XnAP message or the third information may be included in an XnAP message. For example, the F1-terminating-donor-CU may receive the third information (IAB-MT UE ID and/or AMF ID) from the RRC-terminating-donor-CU via an XnAP message.

In some embodiments, the first node may be an F1-terminating-donor-CU, the second node may be an AMF, and the third node may be an IAB-node. For example, the F1-terminating-donor-CU may receive the third information from the IAB-node. The third information may include an IAB-node ID and/or an AMF ID. The IAB-node ID may be an IAB-MT UE ID. The IAB-MT UE ID and/or AMF ID may be received by the IAB-node from the AMF or RRC-terminating-donor-CU.

In some embodiments, the third information may be an F1AP message or the third information may be included in an F1AP message. For example, the F1-terminating-donor-CU may receive the third information (IAB-MT UE ID and/or AMF ID, i.e., an ID of the AMF) from the RRC-terminating-donor-CU via an F1AP message.

In some embodiments, the second information may be an NGAP message. Alternatively, the second information may be included in an NGAP message. For example, after receiving the third information, the F1-terminating-donor-CU may send an NGAP message to the AMF according to the AMF ID in the third information, and the NGAP message includes the IAB-MT UE ID and/or the authorization information request. Optionally, the authorization information request may be used to request information related to an authorization of a mobile IAB-node from the second node, so that after the second node receives the authorization information request, the second node may send the information related to the authorization of the mobile IAB-node to the first node. The mobile IAB-node is an IAB-node associated with the IAB-MT UE ID in the NGAP message.

At step S5303, the first node receives first information from the second node.

In some embodiments, after the second node receives the second information sent by the first node, the second node sends the first information to the first node according to the second information.

In some embodiments, the first node may be an F1-terminating-donor-CU, and the second node may be an AMF. After receiving the second information, the AMF may send the first information to the F1-terminating-donor-CU according to the IAB-MT UE ID and/or the authorization information request in the second information.

In some embodiments, the first information may be an NGAP message. Alternatively, the first information may be included in an NGAP message. For example, after receiving the second information, the AMF may send the first information to the F1-terminating-donor-CU via an NGAP message according to the IAB-MT UE ID and/or the authorization information request in the second information.

At step S5304, the first node determines, based on the first information, whether the mobile IAB-node is authorized to provide a service to a UE.

In embodiments of the present disclosure, the implementation of step S5304 may be implemented in part or in whole adopting the method of step S5102 in the above embodiments, which is not limited here and will not be described in detail.

FIG. 6a is an interaction diagram of an authorization method according to an embodiment of the present disclosure. As shown in FIG. 6a, the embodiment of the present disclosure involves an authorization method performed by a second node. The method may include the following steps.

At step S6101, the second node receives second information from a first node.

In some embodiments, the first node may be an F1-terminating-donor-CU, and the second node may be an RRC-terminating-donor-CU. Alternatively, the first node may be an F1-terminating-donor-CU, and the second node may be an AMF.

In some embodiments, the F1-terminating-donor-CU refers to a donor-CU to which an IAB-DU of an IAB-node is connected, and may also be referred to as an F1-terminating-donor, an IAB-donor or an IAB-donor-CU.

In some embodiments, the RRC-terminating-donor-CU refers to a donor-CU to which an IAB-MT of an IAB-node is connected, and may also be referred to as an RRC-terminating-donor, an IAB-donor or an IAB-donor-CU.

In some embodiments, the second information includes at least one of: an IAB-node ID, used to indicate an identifier of an IAB-node of an authorization request, or an identifier of an IAB-MT or IAB-DU in an IAB-node; an authorization information request indication; or request information related to an authorization.

At step S6102, the second node sends first information to the first node based on the second information.

In the embodiments of the present disclosure, the first information is information related to an authorization of a mobile IAB node, in which the first information is used by the first node to determine whether the mobile IAB node is authorized to provide a service to a UE. With reference to its optional implementation, reference may be made to the optional implementations of step S5102 of FIG. 5a, step S5203 of FIG. 5b, step S5304 of FIG. 5c, and other related parts in the embodiments involved in FIG. 5a, FIG. 5b, and FIG. 5c, which will not be repeated here.

In some embodiments, the first information may include at least one of: authorization information; an IAB-node ID; or information indicating an authorization failure.

In some embodiments, the IAB-node ID includes any one of: a global identifier of an IAB-MT; a UE ID of an IAB-MT on an XnAP; a UE ID of an IAB-MT on an NGAP; a UE ID of an IAB-MT on an F1AP; or a BAP address.

In some embodiments, the information indicating the authorization failure may be a cause value in the request failure, for example, the cause value is set to "not authorized".

FIG. 6b is an interaction diagram of an authorization method according to an embodiment of the present disclosure. As shown in FIG. 6b, the embodiment of the present disclosure involves an authorization method performed by a second node. The method may include the following steps.

At step S6201, the second node receives identifier information for an authorization request from a third node.

In some embodiments, the first node may be an F1-terminating-donor-CU, and the second node may be an RRC-terminating-donor-CU. Alternatively, the first node may be an F1-terminating-donor-CU, and the second node may be an AMF.

In some embodiments, the identifier information includes at least one of: an NG-RAN node ID, used to indicate an identifier of a donor-CU of an IAB-DU; an NCGI and a length of an NG-RAN node ID, used to indicate an identifier of a donor-CU of an IAB-DU; or an IAB-node ID, used to indicate an identifier of an IAB-node or an identifier of an IAB-MT or IAB-DU in an IAB-node.

In some embodiments, the third node may be any one of: an IAB-node; an IAB-MT; an IAB-DU; an OAM; or a donor-CU of an IAB-MT.

In the embodiments of the present disclosure, the implementation of step S6201 can be implemented partially or completely by adopting the method of step S4201 in the above embodiments, which is not limited to this and will not be repeated here.

At step S6202, the second node sends first information to the first node according to the identifier information for the authorization request.

In embodiments of the present disclosure, the first information is information related to an authorization of a mobile IAB-node, and the first information is used by the first node to determine whether the mobile IAB node is authorized to provide a service to a UE. Regarding the optional implementation, reference may be made to the optional implementations of step S5102 of FIG. 5a, step S5203 of FIG. 5b, and step S5304 of FIG. 5c, and other related parts of the embodiments involved in FIG. 5a, FIG. 5b, and FIG. 5c, which will not be repeated here.

In embodiments of the present disclosure, the implementation of step S6202 can be implemented partially or completely by adopting the method of step S4202 in the above embodiments, which is not limited to this and will not be repeated here.

FIG. 6c is an interaction diagram of an authorization method according to an embodiment of the present disclosure. As shown in FIG. 6c, the embodiment of the present disclosure involves an authorization method performed by a second node. The method may include the following steps.

At step S6301, the second node receives first information from a third node.

In some embodiments, the second node is an IAB-node, and the third node is a donor-CU of an IAB-MT. For example, the donor-CU of the IAB-MT may be an RRC-terminating-donor-CU.

In some embodiments, the first information may be included in an RRC message. For example, the IAB-MT in the IAB-node receives the first information from the RRC-terminating-donor-CU via an RRC message.

At step S6302, the second node sends the first information to a first node.

In some embodiments, the first node is an F1-terminating-donor-CU, the second node is an IAB-node, and the third node is a donor-CU of an IAB-MT. The first information sent by the second node to the first node may be included in an F1AP message. For example, the IAB-DU in the IAB-node sends the first information to the F1-terminating-donor-CU via an F1AP message.

In the embodiments of the present disclosure, the first information is information related to an authorization of a mobile IAB-node, and the first information is used by the first node to determine whether the mobile IAB node is authorized to provide a service to a UE. Regarding the optional implementation, reference may be made to the optional implementations of step S5102 of FIG. 5a, step S5203 of FIG. 5b, and step S5304 of FIG. 5c, and other related parts of the embodiments involved in FIG. 5a, FIG. 5b, and FIG. 5c, which will not be repeated here.

FIG. 7a is an interaction diagram of an authorization method according to an embodiment of the present disclosure. As shown in FIG. 7a, the embodiment of the present disclosure involves an authorization method performed by a third node. The method may include the following steps.

At step S7101, the third node sends identifier information for an authorization request to a second node.

In embodiments of the present disclosure, the identifier information is used by the second node to send first information to a first node. Regarding the optional implementation, reference may be made to the optional implementations of step S6202 of FIG. 6b, and other related parts of the embodiments involved in FIG. 6b, which will not be repeated here.

In embodiments of the present disclosure, the first information is information related to an authorization of a mobile IAB-node, and the first information is used by the first node to determine whether the mobile IAB node is authorized to provide a service to a UE. Regarding the optional implementation, reference may be made to the optional implementations of step S5102 of FIG. 5a, step S5203 of FIG. 5b, and step S5304 of FIG. 5c, and other related parts of the embodiments involved in FIG. 5a, FIG. 5b, and FIG. 5c, which will not be repeated here.

In some embodiments, the first information may include at least one of: authorization information; an IAB-node ID; or information indicating an authorization failure.

In some embodiments, the information indicating the authorization failure may be a cause value in the request failure, for example, the cause value is set to "not authorized".

In some embodiments, the IAB-node ID includes any one of: a global identifier of an IAB-MT; a UE ID of an IAB-MT on an XnAP; a UE ID of an IAB-MT on an NGAP; a UE ID of an IAB-MT on an F1AP; or a BAP address.

In some embodiments, the identifier information includes at least one of: an NG-RAN node ID, used to indicate an identifier of a donor-CU of an IAB-DU; an NCGI and a length of an NG-RAN node ID, used to indicate an identifier of a donor-CU of an IAB-DU; or an IAB-node ID, used to indicate an identifier of an IAB-node or an identifier of an IAB-MT or IAB-DU in an IAB-node.

In some embodiments, the first node is an F1-terminating-donor-CU, the second node is an RRC-terminating-donor-CU, and the third node is an IAB-MT or an OAM.

In some embodiments, the first node is an F1-terminating-donor-CU, the second node is an AMF, and the third node is an IAB-MT or an RRC-terminating-donor-CU.

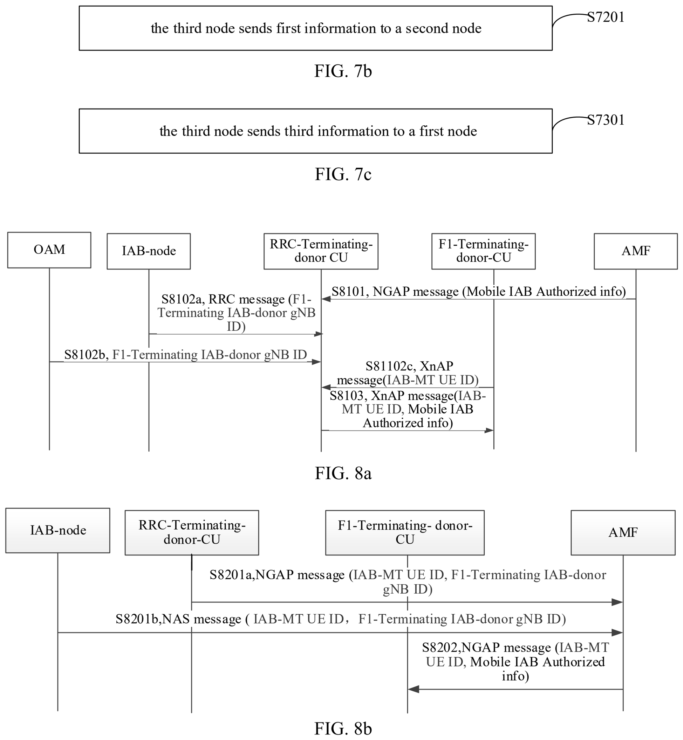

FIG. 7b is an interaction diagram of an authorization method according to an embodiment of the present disclosure. As shown in FIG. 7b, the embodiment of the present disclosure involves an authorization method performed by a third node. The method may include the following steps.

At step S7201, the third node sends first information to a second node.

In embodiments of the present disclosure, after the second node receives the first information sent by the third node, the second node sends the first information to a first node. That is, the second node may receive the first information from the third node and send the first information to the first node. Regarding the optional implementation, reference may be made to the optional implementations of step S6301 in FIG. 6c and other related parts in the embodiments involved in FIG. 6c, which will not be repeated here.

In embodiments of the present disclosure, the first information is information related to an authorization of a mobile IAB-node, and the first information is used by the first node to determine whether the mobile IAB node is authorized to provide a service to a UE. Regarding the optional implementation, reference may be made to the optional implementations of step S5102 of FIG. 5a, step S5203 of FIG. 5b, and step S5304 of FIG. 5c, and other related parts of the embodiments involved in FIG. 5a, FIG. 5b, and FIG. 5c, which will not be repeated here.

In some embodiments, the first information may include at least one of: authorization information; an IAB-node ID; or information indicating an authorization failure.

In some embodiments, the IAB-node ID includes any one of: a global identifier of an IAB-MT; a UE ID of an IAB-MT on an XnAP; a UE ID of an IAB-MT on an NGAP; a UE ID of an IAB-MT on an F1AP; or a BAP address.

In some embodiments, the information indicating the authorization failure may be a cause value in the request failure, for example, the cause value is set to "not authorized".

In some embodiments, the first node is an F1-terminating-donor-CU, the second node is an IAB-node, and the third node is a donor-CU of an IAB-MT.

FIG. 7c is an interaction diagram of an authorization method according to an embodiment of the present disclosure. As shown in FIG. 7c, the embodiment of the present disclosure involves an authorization method performed by a third node. The method may include the following steps.

At step S7301, the third node sends third information to a first node.

In embodiments of the present disclosure, the third information is used by the first node to send second information to a second node. Regarding the optional implementation, reference may be made to the optional implementations of step S5302 of FIG. 5c and other related parts of the embodiments involved in FIG. 5c, which will not be described in detail here.

In embodiments of the present disclosure, the second information is used by the second node to send first information to the first node. Regarding the optional implementation, reference may be made to the optional implementations of step S5303 of FIG. 5c and other related parts of the embodiments involved in FIG. 5c, which will not be described in detail here.

In embodiments of the present disclosure, the first information is information related to an authorization of a mobile IAB-node, and the first information is used by the first node to determine whether the mobile IAB node is authorized to provide a service to a UE. Regarding the optional implementation, reference may be made to the optional implementations of step S5102 of FIG. 5a, step S5203 of FIG. 5b, and step S5304 of FIG. 5c, and other related parts of the embodiments involved in FIG. 5a, FIG. 5b, and FIG. 5c, which will not be repeated here.

In some embodiments, the first information may include at least one of: authorization information; an IAB-node ID; or information indicating an authorization failure.

In some embodiments, the IAB-node ID includes any one of: a global identifier of an IAB-MT; a UE ID of an IAB-MT on an XnAP; a UE ID of an IAB-MT on an NGAP; a UE ID of an IAB-MT on an F1AP; or a BAP address.

In some embodiments, the information indicating the authorization failure may be a cause value in the request failure, for example, the cause value is set to "not authorized".

In some embodiments, the third information includes at least one of: an identifier of the second node, used to indicate an identifier of a donor-CU of an IAB-DU; or an IAB-node ID.

In some embodiments, the first node is an F1-terminating-donor-CU, the second node is an AMF, and the third node is an IAB-node or an RRC-terminating-donor-CU.

Optionally, the authorization method of the embodiments of the present disclosure may be implemented based on the solution of Xn. For example, the donor-CU of the IAB-MT sends the authorization information (such as information related to the authorization of the mobile IAB node) to the donor-CU of the IAB-DU. The donor-CU of the IAB-MT may obtain the gNB-ID of the donor-CU of the IAB-DU in the following ways: way 1, obtaining the gNB-ID of the donor-CU of the IAB-DU via OAM configuration; way 2, obtaining the gNB-ID of the donor-CU of the IAB-DU via IAB-MT reporting; way 3, obtaining the gNB-ID of the donor-CU of the IAB-DU via the donor-CU of the IAB-DU. FIG. 8a is a flowchart of an authorization method according to an embodiment of the present disclosure. It should be noted that the steps in FIG. 8a omit the content that is not related to the present disclosure. As shown in FIG. 8a, the embodiment of the present disclosure relates to an authorization method, and the method includes but is not limited to the following steps.

At step S8101, the RRC-terminating-donor-CU receives mobile IAB authorization information (also called Mobile IAB Authorized info) from the AMF via an NGAP message.

The RRC-terminating-donor-CU is the donor-CU of the IAB-MT in the IAB-node.

At step S8102, if the RRC-terminating-donor-CU and the F1-terminating-donor-CU are different NG-RAN nodes, the RRC-terminating-donor-CU determines the gNB ID of the F1-terminating-donor-CU.

In embodiments of the present disclosure, "the RRC-terminating-donor-CU determining the gNB ID of the F1-terminating-donor-CU" includes at least one of the following ways.

At step S8102a, the RRC-terminating-donor-CU obtains the gNB ID of the F1-terminating-donor-CU via the IAB-MT, that is, the IAB-MT sends the gNB ID of the F1-terminating-donor-CU to the RRC-terminating-donor-CU via an RRC message.

At step S8102b, the RRC-terminating-donor-CU obtains the gNB ID of the F1-terminating-donor-CU via an OAM.

At step S8102c, the RRC-terminating-donor-CU determines the gNB ID of the F1-terminating-donor-CU via an XnAP message received from the F1-terminating-donor-CU, and the F1-terminating-donor-CU sends the XnAP message to the RRC-terminating-donor-CU, in which the XnAP message includes the IAB-MTUE ID, which is used to indicate the ID assigned to the IAB-MT (or IAB-node) by the F1-terminating-donor-CU of the IAB-DU co-located with the IAB-MT.

The IAB-MT UE ID is an XnAP UE ID.

At step S8103, the RRC-terminating-donor-CU sends the mobile IAB authorization information to the F1-terminating-donor-CU via an XnAP message.

The F1-terminating-donor-CU receives the mobile IAB authorization information, stores the received mobile IAB authorization information, and uses it for the mobile IAB-DU accordingly. If the mobile IAB authorization IE is set to "not authorized", the F1-terminating-donor-CU initiates operations with support to ensure that the mobile IAB node does not provide the service to any terminal.

Optionally, the authorization method of the embodiments of the present disclosure may be implemented based on the solution of NG. For example, the AMF of the IAB-MT sends the authorization information to the donor-CU of the IAB-DU. The AMF may obtain the gNB-ID of the donor-CU of the IAB-DU in the following ways. Way 1, the IAB-node informs the AMF via a NAS message. Way 2, the donor-CU of the IAB-MT informs the AMF via an NGAP message. Way 3, the donor-CU of the IAB-DU requests the authorization information from the AMF via an NGAP message (the donor-CU of the IAB-DU may obtain the AMF ID via the IAB-node or the donor-CU of the IAB-MT). FIG. 8b is a flowchart of an authorization method according to an embodiment of the present disclosure. It should be noted that the steps in FIG. 8b omit the content that is not related to the present disclosure. As shown in FIG. 8b, the embodiment of the present disclosure relates to an authorization method, and the method includes but is not limited to the following steps.

At step S8201, the AMF determines the gNB ID of the F1-terminating-donor-CU, and the IAB-MT UE ID of the IAB-MT co-located with the IAB-DU corresponding to the F1-terminating-donor-CU.

In embodiments of the present disclosure, "the AMF determining the gNB ID of the F1-terminating-donor-CU, and the IAB-MT UE ID of the IAB-MT co-located with the IAB-DU corresponding to the F1-terminating-donor-CU" includes at least one of the following ways.

At step S8201a, the AMF receives the IAB-MT UE ID and/or the F1-terminating-donor-CU gNB ID from the RRC-terminating-donor-CU via an NAGP message.

At step S8201b, the AMF receives the IAB-MT UE ID and/or the F1-terminating-donor-CU gNB ID from the IAB-MT.

At step S8202, the AMF sends an NGAP message to the F1-terminating-donor-CU according to the F 1-terminating-donor-CU gNB ID, in which the NGAP message includes the IAB-MT UE ID and/or the mobile IAB authorization information.

The F1-terminating-donor-CU receives the mobile IAB authorization information, stores the received mobile IAB authorization information, and uses it for the mobile IAB-DU accordingly. If the mobile IAB authorization IE of the IAB-MT is set to "not authorized", the F1-terminating-donor-CU initiates operations with support to ensure that the mobile IAB node does not provide the service to any terminal.

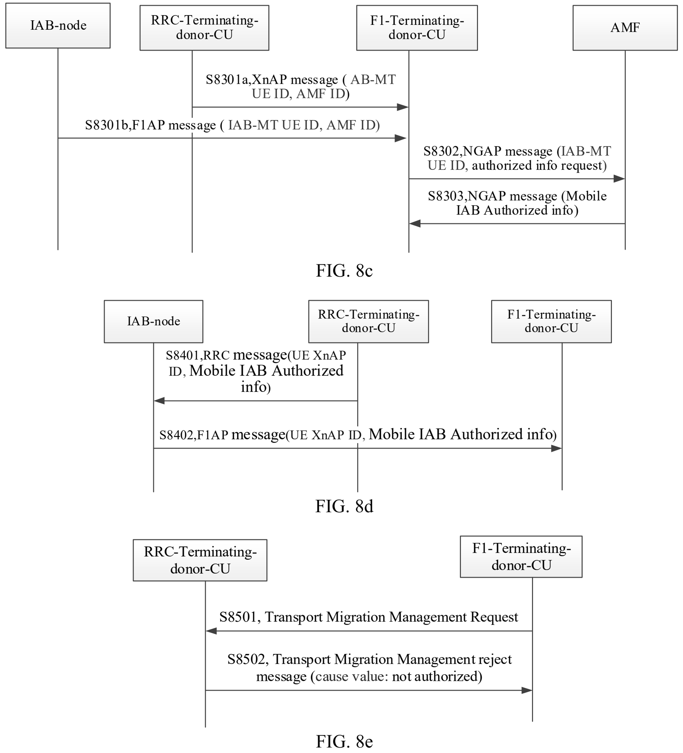

Optionally, the authorization method of the embodiments of the present disclosure may be implemented based on the solution of NG. For example, the AMF of the IAB-MT sends the authorization information to the donor-CU of the IAB-DU. The AMF may obtain the gNB-ID of the donor-CU of the IAB-DU in the following ways. Way 1, the IAB-node informs the AMF via a NAS message. Way 2, the donor-CU of the IAB-MT informs the AMF via an NGAP message. Way 3, the donor-CU of the IAB-DU requests the authorization information from the AMF via an NGAP message (the donor-CU of the IAB-DU may obtain the AMF ID via the IAB-node or the donor-CU of the IAB-MT). FIG. 8c is a flowchart of an authorization method according to an embodiment of the present disclosure. It should be noted that the steps in FIG. 8c omit the content that is not related to the present disclosure. As shown in FIG. 8c, the embodiment of the present disclosure relates to an authorization method, and the method includes but is not limited to the following steps.

At step S8301, the F1-terminating-donor-CU determines the identifier of the AMF, in which the AMF is the AMF of the IAB-MT, and the F1-terminating-donor-CU is the donor-CU of the IAB-DU co-located with the IAB-MT.

In embodiments, "the F1-terminating-donor-CU determining the identifier of the AMF" includes at least one of the following ways.

At step S8301a, the F1-terminating-donor-CU receives the IAB-MT UE ID and/or the AMF ID from the RRC-terminating-donor-CU via an XnAP message.

At step S8301b, the F1-terminating-donor-CU receives the IAB-MT UE ID and/or the AMF ID from the IAB-node via an F1AP message. In some embodiments, the IAB-MT UE ID and/or the AMF ID may be received by the IAB-node from the AMF or the RRC-terminating-donor-CU.

At step S8302, the F1-terminating-donor-CU sends an NGAP message to AMF according to the identifier of the AMF, in which the NGAP message includes the IAB-MT UE ID and/or an authorization information request (also called authorized info request).

At step S8303, the AMF receives and sends the mobile IAB authorization information to the F1-terminating-donor-CU via an NGAP message according to the IAB-MT UE ID and/or the authorization information request.

In some embodiments, the F1-terminating-donor-CU receives the mobile IAB authorization information, stores the received mobile IAB authorization information, and uses it for the mobile IAB-DU accordingly. If the mobile IAB authorization IE of the IAB-MT is set to "not authorized", the F1-terminating-donor-CU initiates an operation with support to ensure that the mobile IAB node does not provide the service to any UE.

Optionally, the authorization method of the embodiments of the present disclosure can be implemented based on the solution of F1AP. For example, the IAB-MT obtains the authorization information from the donor-CU of the IAB-MT, and the IAB-DU sends the authorization information to the donor-CU of the IAB-DU. FIG. 8d is a flowchart of an authorization method according to an embodiment of the present disclosure. It should be noted that the steps in FIG. 8d omit the content that is not related to the present disclosure. As shown in FIG. 8d, the embodiment of the present disclosure relates to an authorization method, and the method includes but is not limited to the following steps.

At step S8401, the IAB-MT in the IAB-node receives the mobile IAB authorization information from the RRC-terminating-donor-CU via an RRC message.

At step S8402, the IAB-DU in the IAB-node sends the mobile IAB authorization information to the F1-terminating-donor-CU via an F1AP message.

In some embodiments, the F1-terminating-donor-CU receives the mobile IAB authorization information, stores the received mobile IAB authorization information, and uses it for the mobile IAB-DU accordingly. If the mobile IAB authorization IE of the IAB-MT is set to "not authorized", the F1-terminating-donor-CU initiates an operation with support to ensure that the mobile IAB node does not provide the service to any UE.

Optionally, the authorization information is always stored in the donor-CU of the IAB-MT. When the donor-CU of the IAB-DU requests for transmission resources from the donor-CU of the IAB-MT, the donor-CU of the IAB-MT can agree or reject the request of the donor-CU of the IAB-DU based on the received authorization information. For example, FIG. 8e is a flowchart of an authorization method according to an embodiment of the present disclosure. It should be noted that the steps in FIG. 8e omit the content that is not related to the present disclosure. As shown in FIG. 8e, the embodiment of the present disclosure relates to an authorization method, and the method includes but is not limited to the following steps.

At step S8501, the F1-terminating-donor-CU sends a Transport Migration Management Request to the RRC-terminating-donor-CU.

At step S8502, if the requested authorization information of the IAB-MT is "not authorized", the RRC-terminating-donor-CU sends a Transport Migration Management reject message to the F1-terminating-donor-CU, and the reject message carries a cause value of "not authorized".

In some embodiments, if the transport migration management procedure has been completed and the authorization information is changed, the RRC-terminating-donor-CU sends an XnAP message to the F1-terminating-donor-CU, and the XnAP message includes information for indicating the authorization update.

In embodiments of the present disclosure, part or all of the steps and their optional implementations may be arbitrarily combined with part or all of the steps in other embodiments, or may be arbitrarily combined with optional implementations of other embodiments.

The embodiments of the present disclosure also propose an apparatus for implementing any of the above methods, for example, an apparatus is proposed, the above apparatus includes units or modules for implementing various steps performed by the terminal in any of the above network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

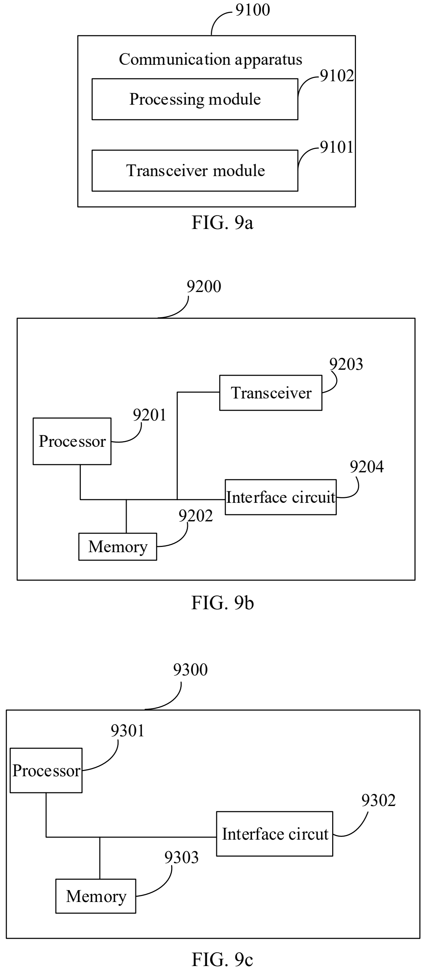

FIG. 9a is a schematic diagram of a communication apparatus proposed in an embodiment of the present disclosure. As shown in FIG. 9a, the communication apparatus 9100 includes at least one of a transceiver module 9101, or a processing module 9102, etc. The communication apparatus 9100 may be a first node, or an apparatus in the first node, or an apparatus that can be used in combination with the first node. Alternatively, the communication apparatus 9100 may be a second node, or an apparatus in the second node, or an apparatus that can be used in combination with the second node. Alternatively, the communication apparatus 9100 may be a third node, or an apparatus in the third node, or an apparatus that can be used in combination with the third node.

The communication apparatus 9100 is a first node: the above-mentioned transceiver module 9101 is configured to receive first information from a second node, in which the first information is information related to an authorization of a mobile IAB-node; the processing module 9102 is configured to determine whether the mobile IAB-node is authorized to provide a service to a UE according to the first information. Optionally, the above-mentioned transceiver module 9101 is configured to execute at least one of the communication steps such as sending and/or receiving performed by the first node in any of the above methods, which will not be repeated here. The processing module 9102 is configured to execute at least one of the other steps performed by the first node in any of the above methods, which will not be repeated here.

The communication apparatus 9100 is a second node: the above-mentioned transceiver module 9101 is configured to send first information to a first node, in which the first information is information related to an authorization of a mobile IAB-node, and the first information is used by the first node to determine whether the mobile IAB-node is authorized to provide a service to a UE. Optionally, the above-mentioned transceiver module 9101 is configured to execute at least one of the communication steps such as sending and/or receiving performed by the second node in any of the above methods, which will not be repeated here. The processing module 9102 is configured to execute at least one of the other steps performed by the second node in any of the above methods, which will not be repeated here.

The communication apparatus 9100 is a third node: the above-mentioned transceiver module 9101 is configured to send identifier information for an authorization request to a second node, in which the identifier information is used by the second node to send first information to a first node, the first information is information related to an authorization of a mobile IAB-node, and the first information is used by the first node to determine whether the mobile IAB-node is authorized to provide a service to a user equipment (UE). Alternatively, the above-mentioned transceiver module 9101 is configured to send first information to a first node via a second node, in which the first information is information related to an authorization of a mobile IAB-node, and the first information is used by the first node to determine whether the mobile IAB-node is authorized to provide a service to a user equipment (UE). Alternatively, the above-mentioned transceiver module 9101 is configured to send third information to a first node, in which the third information is used by the first node to send second information to a second node, the second information is used by the second node to send first information to the first node, the first information is information related to an authorization of a mobile IAB-node, and the first information is used by the first node to determine whether the mobile IAB-node is authorized to provide a service to a user equipment (UE). Optionally, the above-mentioned transceiver module 9101 is configured to execute at least one of the communication steps such as sending and/or receiving performed by the third node in any of the above methods, which will not be repeated here. The processing module 9102 is configured to execute at least one of the other steps performed by the third node in any of the above methods, which will not be repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module may be one module or include multiple submodules. Optionally, the multiple submodules respectively execute all or part of the steps required to be executed by the processing module. Optionally, the processing module may be interchangeable with the processor.

FIG. 9b is a schematic diagram of a communication apparatus 9200 proposed in an embodiment of the present disclosure. The communication apparatus 9200 may be a network device (e.g., an access network device, a core network device, etc., such as a first node, a second node, a third node), or a chip, a chip system, or a processor that supports a network device to implement any of the above methods. The communication apparatus 9200 may be used to implement the method described in the above method embodiments, and for details, reference may be made to the description in the above method embodiments.

As shown in FIG. 9b, the communication apparatus 9200 includes one or more processors 9201. The processor 9101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The communication apparatus 9200 executes any of the above methods.

In some embodiments, the communication apparatus 9200 further includes one or more memories 9202 for storing instructions. Optionally, all or part of the memory 9202 may be outside the communication apparatus 9200.

In some embodiments, the communication apparatus 9200 further includes one or more transceivers 9203. When the communication apparatus 9200 includes one or more transceivers 9203, the communication steps such as sending and receiving in the above methods are performed by the transceiver 9203, and the other steps are performed by the processor 9201.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication apparatus 9200 further includes one or more interface circuits 9204, which are connected to the memory 9202. The interface circuit 9204 may be used to receive signals from the memory 9202 or other apparatuses, and may be used to send signals to the memory 9202 or other apparatuses. For example, the interface circuit 9204 may read instructions stored in the memory 9202 and send the instructions to the processor 9201.

The communication apparatus 9200 described in the above embodiments may be a network device or a terminal, but the scope of the communication apparatus 9200 described in the present disclosure is not limited thereto, and the structure of the communication apparatus 9200 may not be limited by FIG. 9b. The communication apparatus may be an independent device or may be part of a larger device. For example, the communication apparatus may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 9c is a schematic diagram of a chip 9300 proposed in an embodiment of the present disclosure. In case where the communication apparatus 9200 may be a chip or a chip system, reference may be made to the schematic diagram of the chip 9300 shown in FIG. 9c, but the present disclosure is not limited thereto.

The chip 9300 includes one or more processors 9301, and the chip 9300 executes any of the above methods.

In some embodiments, the chip 9300 further includes one or more interface circuits 9302, which are connected to the memory 9303. The interface circuit 9302 may be used to receive signals from the memory 9303 or other apparatuses, and the interface circuit 9302 may be used to send signals to the memory 9303 or other apparatuses. For example, the interface circuit 9302 may read instructions stored in the memory 9303 and send the instructions to the processor 9301.

In some embodiments, the interface circuit 9302 executes at least one of the communication steps such as sending and/or receiving in the above methods, and the processor 9301 executes at least one of the other steps.

Optionally, the terms such as "interface circuit", "interface", "transceiver pin", and "transceiver" may be exchangeable with each other.

In some embodiments, the chip 9300 further includes one or more memories 9303 for storing instructions. Optionally, all or part of the memory 9303 may be outside the chip 9300.

The present disclosure also proposes a storage medium, on which instructions are stored, and when the instructions are executed on the communication apparatus 9200, the communication apparatus 9200 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication apparatus 9200, enables the communication apparatus 9200 to execute any of the above methods. Optionally, the program product is a computer program product.

The present disclosure also proposes a computer program, which, when executed on a computer, causes the computer to execute any one of the above methods.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. An authorization method, performed by a first node, comprising:
receiving first information from a second node, wherein the first information is information related to an authorization of a mobile integrated access and backhaul (IAB)-node; and
determining, according to the first information, whether the mobile IAB-node is authorized to provide a service to a user equipment (UE).

2. The method of claim 1, wherein the first information comprises at least one of:
authorization information;
an IAB-node identifier (IAB-node ID); or
information indicating an authorization failure.

3. The method of claim 2, wherein the IAB-node ID comprises any one of:
a global identifier of an integrated access and backhaul mobile termination (IAB-MT);
a UE identifier (UE ID) of an IAB-MT on an Xn application protocol (XnAP);
a UE ID of an IAB-MT on a next generation application protocol (NGAP);
a UE ID of an IAB-MT on an F1 application protocol (F1AP); or
a backhaul adaptation protocol (BAP) address.

4. The method of any of claims 1-3, wherein
the first node is an F1-terminating-donor-centralized unit (F1-terminating-donor-CU), and the second node is a radio resource control-terminating-donor-centralized unit (RRC-terminating-donor-CU); or
the first node is an F1-terminating-donor-CU, and the second node is an access and mobility management function (AMF); or
the first node is an F1-terminating-donor-CU, and the second node is an IAB-node.

5. The method of claim 1, wherein receiving the first information from the second node comprises:
sending second information to the second node, wherein the second information is used by the second node to send the first information to the first node.

6. The method of claim 5, wherein the second information comprises at least one of:
an IAB-node ID, indicating an identifier of an IAB-node of an authorization request, or an identifier of an IAB-MT or an integrated access and backhaul distributed unit (IAB-DU) in an IAB-node of an authorization request;
an authorization information request indication; or
request information related to the authorization.

7. The method of claim 5 or 6, wherein the first node is an F1-terminating-donor-CU, and the second node is an AMF; and sending the second information to the second node comprises:
receiving third information from a third node; and
sending the second information to the second node according to the third information.

8. The method of claim 7, wherein the third information comprises at least one of:
an identifier of the second node, indicating an identifier of a donor-CU of an IAB-DU; or
an IAB-node ID.

9. The method of claim 7 or 8, wherein the third node is any one of:
an IAB-node; or
an RRC-terminating-donor-CU.

10. An authorization method, performed by a second node, comprising:
sending first information to a first node, wherein the first information is information related to an authorization of a mobile integrated access and backhaul (IAB)-node, and the first information is used by the first node to determine whether the mobile IAB-node is authorized to provide a service to a user equipment (UE).

11. The method of claim 10, wherein the first information comprises at least one of:
authorization information;
an IAB-node identifier (IAB-node ID); or
information indicating an authorization failure.

12. The method of claim 11, wherein the IAB-node ID comprises any one of:
a global identifier of an integrated access and backhaul mobile termination (IAB-MT);
a UE identifier (UE ID) of an IAB-MT on an Xn application protocol (XnAP);
a UE ID of an IAB-MT on a next generation application protocol (NGAP);
a UE ID of an IAB-MT on an F1 application protocol (F1AP); or
a backhaul adaptation protocol (BAP) address.

13. The method of any of claims 10-12, wherein
the first node is an F1-terminating-donor-centralized unit (F1-terminating-donor-CU), and the second node is a radio resource control-terminating-donor-centralized unit (RRC-terminating-donor-CU); or,
the first node is an F1-terminating-donor-CU, and the second node is an access and mobility management function (AMF).

14. The method of claim 13, wherein sending the first information to the first node comprises:
receiving second information from the first node, wherein the second information is used to send the first information to the first node.

15. The method of claim 14, wherein the second information comprises at least one of:
an IAB-node ID, indicating an identifier of an IAB-node of an authorization request, or an identifier of an IAB-MT or an integrated access and backhaul distributed unit (IAB-DU) in an IAB-node of an authorization request;
an authorization information request indication; or
request information related to the authorization.

16. The method of claim 13, wherein sending the first information to the first node comprises:
receiving identifier information for an authorization request from a third node; and
sending the first information to the first node according to the identifier information.

17. The method of claim 16, wherein the third node is any one of:
an IAB-node;
an IAB-MT;
an IAB-DU;
an operation administration and maintenance (OAM); or
a donor-CU of an IAB-MT.

18. The method of claim 16 or 17, wherein the identifier information comprises at least one of:
a next generation radio access network node ID (NG-RAN node ID), indicating an ID of a donor-CU of an IAB-DU;
a new radio cell global identity (NCGI) and a length of an NG-RAN node ID, indicating an ID of a donor-CU of an IAB-DU; or
an IAB-node ID, indicating an identifier of an IAB-node, or an identifier of an IAB-MT or an IAB-DU in an IAB-node.

19. The method of any of claims 10-12, wherein
the first node is an F1-terminating-donor-CU, and the second node is an IAB-node.

20. The method of claim 19, wherein sending the first information to the first node comprises:
receiving the first information from a third node; and
sending the first information to the first node.

21. The method of claim 20, wherein the third node is a donor-CU of an IAB-MT.

22. An authorization method, performed by a third node, comprising:
sending identifier information for an authorization request to a second node, wherein the identifier information is used by the second node to send first information to a first node, the first information is information related to an authorization of a mobile integrated access and backhaul (IAB)-node, and the first information is used by the first node to determine whether the mobile IAB-node is authorized to provide a service to a user equipment (UE).

23. The method of claim 22, wherein the first information comprises at least one of:
authorization information;
an IAB-node identifier (IAB-node ID); or
information indicating an authorization failure.

24. The method of claim 23, wherein the IAB-node ID comprises any one of:
a global identifier of an integrated access and backhaul mobile termination (IAB-MT);
a UE identifier (UE ID) of an IAB-MT on an Xn application protocol (XnAP);
a UE ID of an IAB-MT on a next generation application protocol (NGAP);
a UE ID of an IAB-MT on an F1 application protocol (F1AP); or
a backhaul adaptation protocol (BAP) address.

25. The method of claim 22, wherein the identifier information comprises at least one of:
a next generation radio access network node ID (NG-RAN node ID), indicating an ID of a donor-centralized unit (donor-CU) of an integrated access and backhaul distributed unit (IAB-DU);
a new radio cell global identity (NCGI) and a length of an NG-RAN node ID, indicating an ID of a donor-CU of an IAB-DU; or
an IAB-node ID, indicating an identifier of an IAB-node, or an identifier of an IAB-MT or an IAB-DU in an IAB-node.

26. The method of any of claims 22-25, wherein
the first node is an F1-terminating-donor-centralized unit (F1-terminating-donor-CU), the second node is a radio resource control-terminating-donor-centralized unit (RRC-terminating-donor-CU), and the third node is an IAB-MT or an operation administration and maintenance (OAM); or,
the first node is an F1-terminating-donor-CU, the second node is an access and mobility management function (AMF), and the third node is an IAB-MT or an RRC-terminating-donor-CU.

27. An authorization method, performed by a third node, comprising:
sending first information to a first node via a second node, wherein the first information is information related to an authorization of a mobile integrated access and backhaul (IAB)-node, and the first information is used by the first node to determine whether the mobile IAB-node is authorized to provide a service to a user equipment (UE).

28. The method of claim 27, wherein the first information comprises at least one of:
authorization information;
an IAB-node identifier (IAB-node ID); or
information indicating an authorization failure.

29. The method of claim 28, wherein the IAB-node ID comprises any one of:
a global identifier of an integrated access and backhaul mobile termination (IAB-MT);
a UE identifier (UE ID) of an IAB-MT on an Xn application protocol (XnAP);
a UE ID of an IAB-MT on a next generation application protocol (NGAP);
a UE ID of an IAB-MT on an F1 application protocol (F1AP); or
a backhaul adaptation protocol (BAP) address.

30. The method of any of claims 27-29, wherein
the first node is an F1-terminating-donor-centralized unit (F1-terminating-donor-CU), the second node is an IAB-node, and the third node is a donor-centralized unit (donor-CU) of an IAB-MT.

31. An authorization method, performed by a third node, comprising:
sending third information to a first node, wherein the third information is used by the first node to send second information to a second node, the second information is used by the second node to send first information to the first node, the first information is information related to an authorization of a mobile integrated access and backhaul (IAB)-node, and the first information is used by the first node to determine whether the mobile IAB-node is authorized to provide a service to a user equipment (UE).

32. The method of claim 31, wherein the first information comprises at least one of:
authorization information;
an IAB-node identifier (IAB-node ID); or
information indicating an authorization failure.

33. The method of claim 32, wherein the IAB-node ID comprises any one of:
a global identifier of an integrated access and backhaul mobile termination (IAB-MT);
a UE identifier (UE ID) of an IAB-MT on an Xn application protocol (XnAP);
a UE ID of an IAB-MT on a next generation application protocol (NGAP);
a UE ID of an IAB-MT on an F1 application protocol (F1AP); or
a backhaul adaptation protocol (BAP) address.

34. The method of any of claims 31-33, wherein the third information comprises at least one of:
an identifier of the second node, indicating an identifier of a donor-centralized unit (donor-CU) of an integrated access and backhaul distributed unit (IAB-DU); or
an IAB-node ID.

35. The method of any of claims 31-34, wherein
the first node is an F1-terminating-donor-centralized unit (F1-terminating-donor-CU), the second node is an access and mobility management function (AMF), and the third node is an IAB-node or a radio resource control-terminating-donor-centralized unit (RRC-terminating-donor-CU).

36. An authorization method, performed by a communication system, comprising:
sending, by a second node, first information to a first node, wherein the first information is information related to an authorization of a mobile integrated access and backhaul (IAB)-node; and
receiving, by the first node, the first information, and determining, according to the first information, whether the mobile IAB-node is authorized to provide a service to a user equipment (UE).

37. A first communication apparatus, comprising:
a transceiver module, configured to receive first information from a second node, wherein the first information is information related to an authorization of a mobile integrated access and backhaul (IAB)-node; and
a processing module, configured to determine, according to the first information, whether the mobile IAB-node is authorized to provide a service to a user equipment (UE).

38. A second communication apparatus, comprising:
a transceiver module, configured to send first information to a first node, wherein the first information is information related to an authorization of a mobile integrated access and backhaul (IAB)-node, and the first information is used by the first node to determine whether the mobile IAB-node is authorized to provide a service to a user equipment (UE).

39. A third communication apparatus, comprising:
a transceiver module, configured to send identifier information for an authorization request to a second node, wherein the identifier information is used by the second node to send first information to a first node, the first information is information related to an authorization of a mobile integrated access and backhaul (IAB)-node, and the first information is used by the first node to determine whether the mobile IAB-node is authorized to provide a service to a user equipment (UE).

40. A fourth communication apparatus, comprising:
a transceiver module, configured to send first information to a first node via a second node, wherein the first information is information related to an authorization of a mobile integrated access and backhaul (IAB)-node, and the first information is used by the first node to determine whether the mobile IAB-node is authorized to provide a service to a user equipment (UE).

41. A fifth communication apparatus, comprising:
a transceiver module, configured to send third information to a first node, wherein the third information is used by the first node to send second information to a second node, the second information is used by the second node to send first information to the first node, the first information is information related to an authorization of a mobile integrated access and backhaul (IAB)-node, and the first information is used by the first node to determine whether the mobile IAB-node is authorized to provide a service to a user equipment (UE).

42. A communication apparatus, comprising:
one or more processors;
wherein the processor is configured to call instructions to cause the communication apparatus to perform the method of any one of claims 1 to 9, 10 to 21, 22 to 26, 27 to 30 or 31 to 35.

43. A communication system comprising a first node and a second node, wherein the first node is configured to perform the method of any one of claims 1 to 9, the second node is configured to perform the method of any one of claims 10 to 21.

44. A storage medium having instructions stored thereon, wherein when the instructions are executed on a communication apparatus, the communication apparatus is caused to perform the method of any one of claims 1 to 9, 10 to 21, 22 to 26, 27 to 30 or 31 to 35.
